(19) Europäisches Patentamt / European Patent Office / Office européen des brevets

(11) **EP 4 683 406 A1**

(12) **EUROPEAN PATENT APPLICATION**
published in accordance with Art. 153(4) EPC

(43) Date of publication:
**21.01.2026 Bulletin 2026/04**

(21) Application number: **23926824.6**

(22) Date of filing: **16.03.2023**

(51) International Patent Classification (IPC):
**H04W 72/0446** (2023.01)

(52) Cooperative Patent Classification (CPC):
**H04W 72/0446**

(86) International application number:
**PCT/CN2023/081981**

(87) International publication number:
**WO 2024/187472 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **ZHAO, Zhenshan**
**Dongguan, Guangdong 523860 (CN)**

(74) Representative: **Taor, Simon Edward William et al**
**Venner Shipley LLP**
**200 Aldersgate**
**London EC1A 4HD (GB)**

(54) **SIDELINK TRANSMISSION METHOD AND TERMINAL DEVICES**

(57) Provided herein are a method for sidelink transmission and a terminal device. The method includes the following. A first terminal device determines first information; the first information is used to indicate a time-domain resource belonging to a resource pool within an SFN duration. The resource pool is used for transmission of a PSCCH and/or a PSSCH based on a first time unit, the first time unit comprising $M1$ consecutive slots, and $M1$ being a positive integer greater than 1. In embodiments of the disclosure, for a resource pool used for transmission of PSCCH and/or PSSCH based on a first time unit, the time-domain resources belonging to a resource pool within an SFN duration can be indicated through first information. The method for resource indication helps to improve the matching degree with transmission schemes that transmit PSCCH and/or PSSCH at the granularity of the first time unit.

First terminal device determines first information — S1410

FIG. 14

**Description**

TECHNICAL FIELD

The disclosure relates to the field of communication technology, and more specifically, to a method for sidelink transmission and a terminal device.

BACKGROUND

Currently, when determining the time-domain resources of a resource pool, a bitmap is used to indicate, at the granularity of slots, whether a corresponding time-domain resource belongs to the resource pool. Specifically, if there are $10240 \cdot 2^{\mu}$ slots in a system frame number (SFN) duration, the bitmap can be periodically repeated within the SFN duration to indicate the slots belonging to the resource pool. For instance, slots corresponding to bits with a value of 1 in the bitmap belong to the resource pool, while slots corresponding to bits with a value of 0 in the bitmap do not belong to the resource pool. However, this approach of indicating time-domain resources using a bitmap at the granularity of a single slot is not applicable to sidelink transmission at the granularity of consecutive multiple slots (also referred to as "first time unit").

SUMMARY

Disclosed herein are a method for sidelink transmission and a terminal device. Various aspects of the disclosure will be introduced below.

In a first aspect, a method for sidelink transmission is provided. The method includes the following. A first terminal device determines first information, where the first information is used to indicate a time-domain resource belonging to a resource pool within one system frame number (SFN) duration. The resource pool is used for transmission of a physical sidelink control channel (PSCCH) and/or a physical sidelink shared channel (PSSCH) based on a first time unit, the first time unit includes M1 consecutive slots, and M1 is a positive integer greater than 1.

In a second aspect, a terminal device is provided. The terminal device is a first terminal device and includes a processing unit. The processing unit is configured to determine first information, where the first information is used to indicate a time-domain resource belonging to a resource pool within one SFN duration. The resource pool is used for PSCCH and/or PSSCH transmission based on a first time unit, the first time unit includes M1 consecutive slots, and M1 is a positive integer greater than 1.

In a third aspect, a terminal device is provided. The terminal device includes a processor, a memory, and a communication interface. The memory is configured to store one or more computer programs. The processor is configured to invoke the computer programs in the memory, causing the terminal device to perform all or part of the steps in the method of the first aspect.

In a fourth aspect, embodiments of the disclosure provide a communication system, which includes the aforementioned terminal device. In another possible design, the system may also include other devices that interact with the terminal device in the technical solution provided in embodiments of the disclosure.

In a fifth aspect, embodiments of the disclosure provide a computer-readable storage medium, which stores a computer program. The computer program is operable to cause a communication device (such as a terminal device) to execute all or part of the steps in the method of the above aspect.

In a sixth aspect, embodiments of the disclosure provide a computer program product, which includes a non-transitory computer-readable storage medium storing a computer program. The computer program is operable to cause a communication device (such as a terminal device) to execute all or part of the steps in the method of the above aspect. In some embodiments, the computer program product may be a software installation package.

In a seventh aspect, embodiments of the disclosure provide a chip, which includes a memory and a processor. The processor can invoke and run a computer program from the memory to execute all or part of the steps described in the method of the above aspect.

In the embodiments of the disclosure, for resource pools that is used to transmit PSCCH and/or PSSCH based on the first time unit, the time-domain resources belonging to the resource pool within an SFN duration can be indicated by the first information. This resource indication method helps improve the matching degree with the transmission scheme of transmitting PSCCH and/or PSSCH at the granularity of the first time unit.

BRIEF DESCRIPTION OF THE DRAWINGS

FIG. 1 is an exemplary architecture diagram of a wireless communication system to which the embodiments of the disclosure can be applied.

FIG. 2 is an exemplary scenario diagram of sidelink communication in network coverage.

FIG. 3 is an exemplary scenario diagram of sidelink communication with partial network coverage.

FIG. 4 is an exemplary scenario diagram of sidelink communication out of network coverage.

FIG. 5 is an exemplary scenario diagram of sidelink communication based on a central control node.

FIG. 6 is an exemplary diagram of a sidelink communication mode based on broadcasting.

FIG. 7 is an exemplary diagram of a sidelink communication mode based on unicast.

FIG. 8 is an exemplary diagram of a sidelink communication mode based on multicast.

FIG. 9A is an exemplary diagram of a slot structure used in a sidelink communication system.

FIG. 9B is another exemplary diagram of a slot structure used in a sidelink communication system.

FIG. 10 is an exemplary diagram of a slot structure for sidelink synchronization signal blocks (S-SSB) transmission.

FIG. 11A is an exemplary diagram of the structure of a first time unit provided in embodiments of the disclosure.

FIG. 11B is another exemplary diagram of the structure of the first time unit provided in embodiments of the disclosure.

FIG. 11C is another exemplary diagram of the structure of the first time unit provided in embodiments of the disclosure.

FIG. 11D is another exemplary diagram of the structure of the first time unit provided in embodiments of the disclosure.

FIG. 12A is another exemplary diagram of the structure of the first time unit provided in embodiments of the disclosure.

FIG. 12B is another exemplary diagram of the structure of the first time unit provided in embodiments of the disclosure.

FIG. 12C is another exemplary diagram of the structure of the first time unit provided in embodiments of the disclosure.

FIG. 12D is another exemplary diagram of the structure of the first time unit provided in embodiments of the disclosure.

FIG. 12E is another exemplary diagram of the structure of the first time unit provided in embodiments of the disclosure.

FIG. 12F is another exemplary diagram of the structure of the first time unit provided in embodiments of the disclosure.

FIG. 13A is another exemplary diagram of the structure of the first time unit provided in embodiments of the disclosure.

FIG. 13B is another exemplary diagram of the structure of the first time unit provided in embodiments of the disclosure.

FIG. 13C is another exemplary diagram of the structure of the first time unit provided in embodiments of the disclosure.

FIG. 13D is another exemplary diagram of the structure of the first time unit provided in embodiments of the disclosure.

FIG. 13E is another exemplary diagram of the structure of the first time unit provided in embodiments of the disclosure.

FIG. 13F is another exemplary diagram of the structure of the first time unit provided in embodiments of the disclosure.

FIG. 14 is an exemplary flowchart of a method for sidelink transmission according to embodiments of the disclosure.

FIG. 15 is an exemplary diagram of a terminal device according to embodiments of the disclosure.

FIG. 16 is an exemplary schematic diagram of a communication device according to embodiments of the disclosure.

## DETAILED DESCRIPTION

### Communication System Architecture

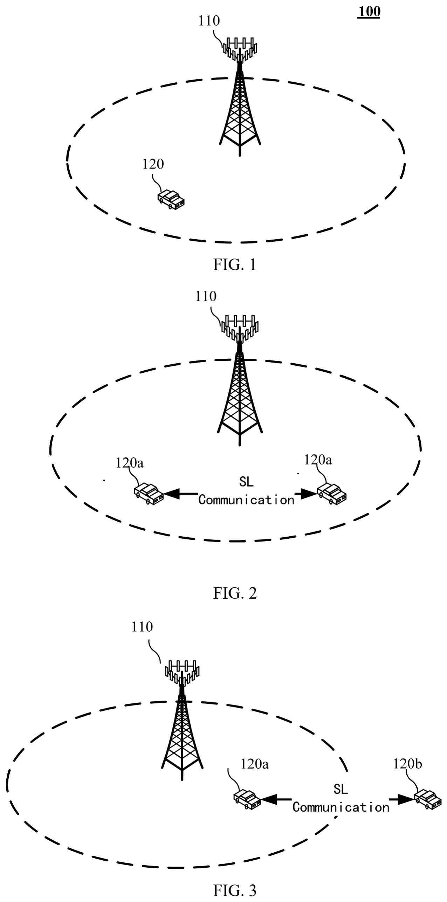

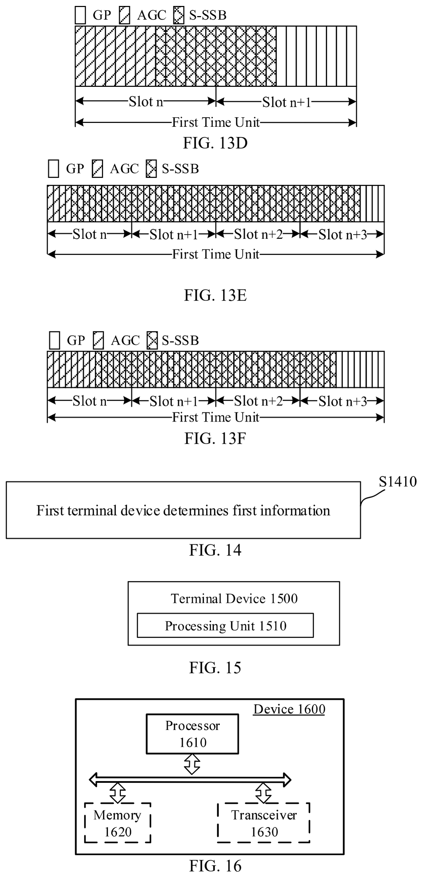

FIG. 1 is an exemplary architecture diagram of a wireless communication system 100 to which the embodiments of the disclosure can be applied. The wireless communication system 100 may include a network device 110 and a terminal device 120. The network device 110 is a device that can communicate with the terminal device 120. The network device 110 is capable of providing communication coverage for a specific geographic area and can communicate with the terminal device 120 located within this coverage area.

While FIG. 1 exemplarily illustrates one network device and one terminal device, the wireless communication system 100 may optionally include one or more network devices 110 and/or one or more terminal devices 120. Regarding one network device 110, the one or more terminal devices 120 can all within the network coverage of the network device 110, all outside the network coverage, or partially in and partially outside the coverage area. The embodiments of the disclosure do not impose any limitations in this regard.

Optionally, the wireless communication system 100 may also include other network entities such as network controllers and mobile management entities. The embodiments of the disclosure do not specify restrictions on this aspect.

It should be understood that the technical solutions of the embodiments of the disclosure can be applied to various communication systems, such as the fifth-generation (5G) system or new radio (NR), long-term evolution (LTE) systems, LTE frequency division duplex (FDD) systems, LTE time division duplex (TDD), etc. The technical solutions provided in the disclosure can also be applied to future communication systems, such as the sixth-generation (6G) mobile communication system, satellite communication systems, and so on.

In the embodiments of the disclosure, the terminal device may also be referred to as user equipment (UE), access terminal, user unit, user station, mobile station, mobile station (MS), mobile terminal (MT), remote station, remote terminal device, mobile device, user terminal, wireless communication device, user agent, or user device. The terminal device in the embodiments of the disclosure refers to a device oriented towards voice and/or data connectivity, which can be used to connect people, objects, and machines. Examples include handheld devices and in-vehicle devices with wireless connectivity functions. The terminal devices in the embodiments of the disclosure can be mobile phones, tablet computers (Pad), laptops, palm-top computers, mobile internet devices (MIDs), wearable devices, vehicles, wireless terminals in industrial control, wireless terminals in self-driving, wireless terminals in remote medical surgery, wireless terminals in smart grids, wireless terminals in transportation safety, wireless terminals in smart cities, wireless terminals in smart homes, etc. For instance, a terminal device can act as a scheduling entity, providing sidelink signals between terminal devices in vehicle-to-everything (V2X) or device-to-device (D2D) communications. Cellular phones and automobiles can communicate with each other using sidelink signals. Communications can occur between cellular phones and smart home devices without the need for signal relaying through a base station. Optionally, a terminal device can also act as a base station.

The network device in the embodiments of the disclosure refers to a device in communication with the terminal device. It can also be called access network device or radio access network (RAN) device, such as a base station. The network device in the disclosure can be a RAN node (or device) that connects the terminal device to a wireless network. The "base station" can generally cover various names or be interchangeable with the following: NodeB, evolved NodeB (eNB), next generation NodeB (gNB), relay station, access point, transmitting and receiving point (TRP), transmitting point (TP), master station MeNB, secondary station SeNB, multi-standard radio (MSR) node, home base station, network controller, access node, wireless node, access point (AP), transmission node, transceiver node, baseband unit (BBU), remote radio unit (RRU), active antenna unit (AAU), remote radio head (RRH), central unit (CU), distributed unit (DU), positioning node, etc. Base stations can be macro base stations, micro base stations, relay nodes, donor nodes, or similar entities, or a combination thereof. The term "base station" can also refer to communication modules, modems, or chips installed in the aforementioned devices or apparatus. Additionally, base stations can function as devices responsible for base station operations in device-to-device (D2D), V2X, machine-to-machine (M2M) communications, network-side device in 6G networks, or devices performing base station functions in future communication systems. Base stations can support networks with the same or different access technologies. The disclosure does not impose specific limitations on the technologies and forms of network device.

Base stations can be either fixed or mobile. For example, helicopters or drones can be configured to act as mobile base stations, with one or more cells moving according to the position of the mobile base station. In other cases, the helicopter or drone can be configured as a device which communicates with another base station.

In some deployments, the network device in the disclosure can refer to as a centralized unit (CU) or distributed unit (DU), or the network device can include both CU and DU. A gNB may also include an active antenna unit (AAU).

The network device and terminal device can be deployed on land, including indoor or outdoor settings, handheld or in-vehicle installations, they can also be deployed on water surfaces, or on aerial platforms such as airplanes, balloons, and satellites. The disclosure does not impose any limitations on the scenarios where the network device and the terminal device are deployed.

## Sidelink Communication Under Different Network Coverage Scenarios

Sidelink communication refers to communication technology based on a sidelink. For example, sidelink communication can be device-to-device (D2D) or vehicle-to-everything (V2X) communication. In traditional cellular systems, communication data is transmitted and received between a terminal device and a network device. However, sidelink communication allows direct data transmission between terminal devices. Compared to traditional cellular communication, this direct data transmission can achieve higher spectral efficiency and lower transmission latency. For instance, vehicle-to-everything (V2X) systems utilize sidelink communication technology.

Based on the network coverage of the terminal device, sidelink communication can be categorized into three scenarios: in-coverage, partial-coverage, and out-of-coverage.

FIG. 2 illustrates an in-coverage sidelink communication scenario. In the scenario illustrated in FIG. 2, two terminal devices 120a are within the coverage area of network device 110. Both terminal devices 120a can receive configuration signaling (which can be configuration information either) from network device 110 and determine the sidelink configuration based on this signaling. Once both terminal devices 120a have completed their sidelink configuration, they can communicate over the sidelink.

FIG. 3 illustrates a partial-coverage sidelink communication scenario. In the scenario illustrated in FIG. 3, terminal device 120a and terminal device 120b perform sidelink communication. Terminal device 120a, within the coverage of network device 110, can receive configuration signaling from the network device 110 and determine the sidelink configuration according to the configuration signaling. In contrast, terminal device 120b, located outside the network coverage, cannot receive configuration signaling from network device 110. In this case, terminal device 120b determines the sidelink configuration based on pre-configuration information and/or information carried in the physical sidelink broadcast channel (PSBCH) transmitted by terminal device 120a within the network coverage. After both terminal devices 120a and 120b complete their sidelink configuration, they can communicate over the sidelink.

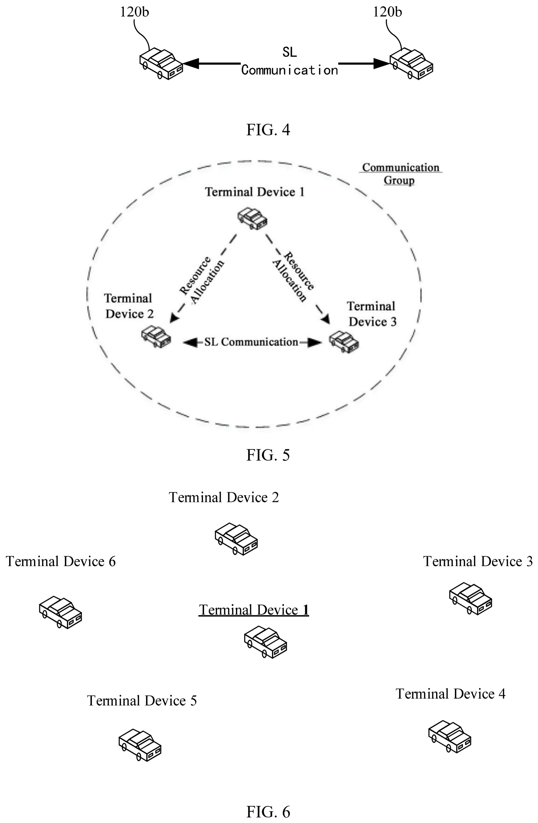

FIG. 4 illustrates an out-of-coverage sidelink communication scenario. Here, both terminal devices 120b are outside the network coverage. In this case, both terminal devices 120b determine the sidelink configuration based on pre-configuration information. Once both terminal devices 120b have completed their sidelink configuration, they can communicate over the sidelink.

## Sidelink Communication Based on a Central Control Node

FIG. 5 illustrates a sidelink communication scenario based on a central control node. In this sidelink communication scenario, multiple terminal devices form a communication group with a central control node. This central control node, which can be a terminal device within the group (e.g., terminal device 1 in FIG. 5), is also known as a cluster head (CH) terminal device. The central control node can be responsible for completing one or more of the following functions: establishing the communication group, managing joining and leaving of group members, coordinating resources within the group, allocating sidelink transmission resources to other terminal devices, receiving sidelink feedback from other terminal devices, and coordinating resources with other communication groups.

## Sidelink Communication Modes

Standards or protocols like the 3rd generation partnership project (3GPP) define two sidelink communication modes: Mode 1 and Mode 2.

In Mode 1, the network device allocates resources (the "resources" referred to herein is also known as "transmission resources", e.g., time-frequency resources) to terminal devices. The terminal device can then transmit data over the sidelink using the resources allocated by the network device. The network device can allocate to the terminal device resources for single-transmission or semi-static transmission. This mode is applicable to a scenario with network coverage, such as the scenario illustrated in FIG. 2. In the scenario illustrated in FIG. 2, the terminal device 120a is within the network coverage of the network device 100, and the network device 110 can allocate sidelink transmission resources to the terminal device 120a.

In Mode 2, the terminal device autonomously selects one or more resources from a resource pool (RP). The terminal device then performs sidelink transmission using the selected resources. For example, in the scenario illustrated in FIG. 4, the terminal device 120b is located outside the cell coverage and therefore, can autonomously select resources from a pre-configured resource pool for sidelink transmission. Alternatively, in the scenario illustrated in FIG. 2, the terminal device 120a can also select one or more resources from a resource pool configured by the network device 110 for sidelink transmission.

## Data Transmission Methods for Sidelink Communication

Certain sidelink communication systems, such as long-term evolution for vehicle-to-everything (LTE-V2X), support data transmission based on broadcast (in the following, broadcast transmission for short). In broadcast transmission, a receiving device can be any terminal device around the transmitting device. For example, in FIG. 6, terminal device 1 is the transmitting device, and the receiving devices can be any terminal devices around terminal device 1, such as terminal devices 2 to 6 in FIG. 6.

In addition to broadcast transmission, some communication systems also support data transmission based on unicast (in the following, unicast transmission for short) and data transmission based on multicast (in the following, multicast transmission for short). For instance, new radio for vehicle-to-everything (NR-V2X) aims to support autonomous driving, which requires higher data interaction performance between vehicles. For example, data exchange between vehicles requires higher throughput, lower latency, higher reliability, larger coverage, and more flexible resource allocation methods. Therefore, in order to improve the data exchange performance between vehicles, NR-V2X introduces unicast transmission and multicast transmission.

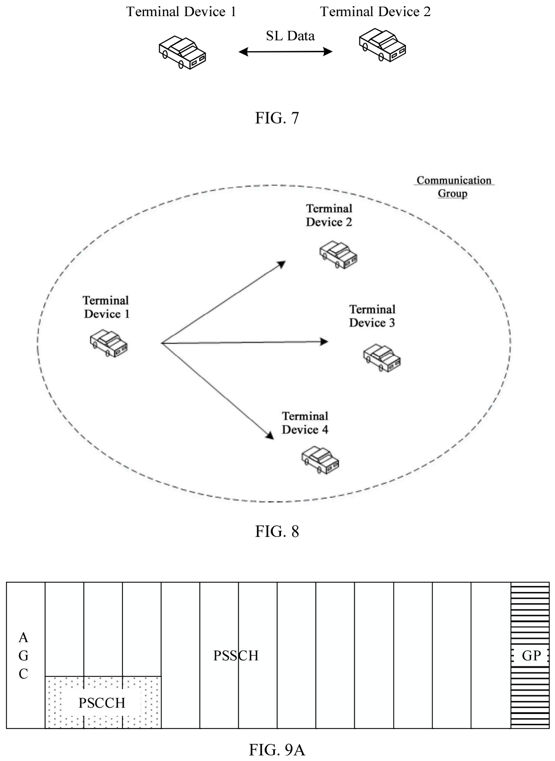

In unicast transmission, there is typically only one receiving device. For example, in FIG. 7, terminal device 1 and terminal device 2 perform unicast transmission. Terminal device 1 can be the transmitting device, terminal device 2 can be the receiving device, or terminal device 1 can be the receiving device, and terminal device 2 can be the transmitting device.

In multicast transmission, the receiving device can be a terminal device within the same communication group or within a certain transmission distance. For example, as illustrated in FIG. 8, terminal devices 1, 2, 3, and 4 form a communication group. If terminal device 1 transmits data, other terminal devices in the group (terminal devices 2 to 4) can all be receiving devices.

## Slot Structure for Sidelink Communication

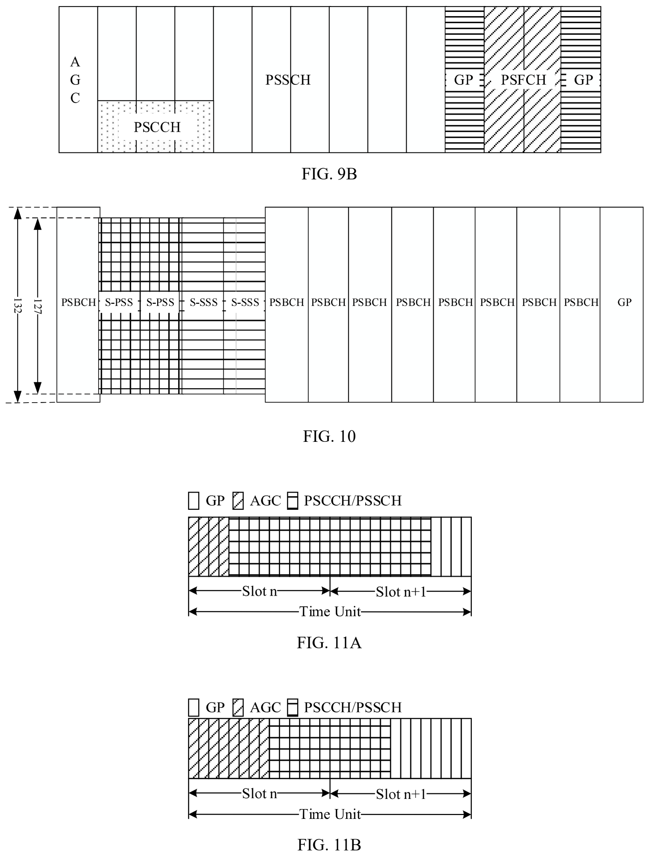

Communication systems can define the frame, subframe, or slot structure for sidelink communication. Some sidelink communication systems define multiple slot structures. For example, the sidelink communication system based on new radio (NR SL) defines two slot structures. One slot structure does not have a physical sidelink feedback channel (PSFCH) (see FIG. 9A), while the other does have PSFCH (see FIG. 9B).

In NR SL, the physical sidelink control channel (PSCCH) can start at the second sidelink symbol of the slot structure in the time domain and can occupy 2 or 3 symbols (the symbols mentioned here can all refer to orthogonal frequency division multiplexing (OFDM) symbols). PSCCH can also occupy multiple physical resource blocks (PRBs) in the frequency domain. For instance, the number of PRBs occupied by PSCCH can be selected from the set {10, 12, 15, 20, 25}.

To reduce the complexity of blind detection of PSCCH by the terminal device, typically, only one type of symbol quantity and PRB quantity is configured for PSCCH within a resource pool. Additionally, since NR SL uses a sub-channel as the minimum granularity for physical sidelink shared channel (PSSCH) resource allocation, the number of PRBs occupied by PSCCH must be less than or equal to the number of PRBs contained in a sub-channel within the resource pool.

As illustrated in FIG. 9A, for the slot structure without PSFCH, the PSSCH in NR SL can start at the 2nd sidelink symbol in the time domain. The last sidelink symbol of the slot is used as a guard period (GP), and the remaining symbols can all be mapped to PSSCH. The 1st sidelink symbol of the slot can be a repetition of the 2nd sidelink symbol. The GP is also referred to as a guard symbol. The 1st sidelink symbol of the slot can be the repetition of the 2nd sidelink symbol. Typically, the terminal device as the receiving device will use the 1st sidelink symbol for automatic gain control (AGC). Therefore, the data on the 1st sidelink symbol is usually not used for data demodulation. PSSCH can occupy $K$ sub-channels in the frequency domain, and each sub-channel can include $M$ consecutive PRBs (the values of $K$ and $M$ can be protocol predefined, preconfigured, configured by network device, or dependent on terminal device implementation).

FIG. 9B illustrates a slot structure with PSFCH. In FIG. 9B, the positions of symbols occupied by PSFCH, PSCCH, and PSSCH in a slot are illustrated. The main difference from FIG. 9A is that the second-to-last and third-to-last symbols in the slot structure of FIG. 9B are used for PSFCH transmission. Additionally, the symbol immediately before the PSFCH symbols also functions as a GP (or guard symbol). In the slot structure of FIG. 9B, in one slot, the last symbol is used as a GP, the second-to-last symbol is for PSFCH transmission, and data of the third-to-last symbol is the same as the data of the second-to-last symbol for PSFCH transmission, that is, the third-to-last symbol serving as an AGC symbol. The fourth-to-last symbol functions the same as the last symbol, that is, functions as a GP. Moreover, the 1st symbol of a slot is used for AGC and contains the same data as the 2nd symbol of the slot. The PSCCH occupies three symbols, with the remaining symbols can be used for PSSCH transmission.

DMRS Structures for PSBCH and PSBCH

In sidelink communication systems such as NR SL, the sidelink synchronization signal block (S-SSB) includes both the sidelink synchronization signal and the physical sidelink broadcast channel (PSBCH). The sidelink synchronization signal is further classified into a sidelink primary synchronization signal (S-PSS) and a sidelink secondary synchronization signal (S-SSS), and S-SSB is also known as the S-SS/PSBCH block.

In the time domain, the S-PSS occupies the 2nd and 3rd symbols of a slot, while the S-SSS occupies the 4th and 5th symbols of the slot. The last symbol of the slot is a GP (or guard symbol), with the remaining symbols used for PSBCH transmission. The S-PSS and S-SSS are consecutive in the time domain, allowing channel estimation results obtained from the S-PSS to be applied to S-SSS detection, to enhance the performance of S-SSS detection.

In the frequency domain, the PSBCH occupies 11 consecutive PRBs, equivalent to 132 subcarriers (each PRB includes 12 subcarriers). The S-PSS and S-SSS each with a length of 127, therefore, on the symbols where S-PSS and S-SSS are located, subcarriers #0, #1, #129, #130, and #131 are set to zero, as depicted in FIG. 10.

Each symbol occupied by the PSBCH includes a PSBCH DMRS, which is mapped to subcarriers #0, #4, and #8 within the resource blocks (RBs) occupied by the PSBCH.

**New Frequency Bands (High Frequency) for Communication Systems**

Certain communication systems, such as NR systems, are currently focusing on two main frequency bands: frequency range 1 (FR1) and frequency range 2 (FR2). The frequency bands included in FR1 and FR2 are illustrated in Table 1 below.

Table 1: Definitions of Frequency Bands Corresponding to FR1 and FR2

| Definition of Frequency Bands | Corresponding Frequency Range |
| --- | --- |
| FR1 | 410 MHz - 7.125 GHz |
| FR2 | 24.25 GHz - 52.6 GHz |

With evolution of communication systems such as the NR system, technologies for new frequency bands (commonly referred to as high frequencies) are also being investigated. The frequency of the new frequency band mentioned here can be higher than that of FR1 and FR2, for example, it can include the frequency range illustrated in Table 2 below.

Table 2: One Possible Definition of the New Frequency Band

| Definition of Frequency Bands | Corresponding Frequency Range |
|---|---|
| FRX | 52.6 GHz - 71 GHz |

The new frequency band is denoted as FRX here only to distinguish it from FR1 and FR2, and does not intend to limit the name of the new frequency band. For example, FRX could also be termed FR3. Alternatively, FR2 in Table 1 could be designated as FR2-1, and FRX in Table 2 as FR2-2. Of course, apart from the two methods mentioned above, other ways to identify this new frequency band are also possible, and the disclosure does not specify any limitations in this regard.

The FRX frequency band may include licensed spectrum as well as unlicensed spectrum. In other words, the FRX frequency band may encompass shared spectrum as well as unshared spectrum. The unlicensed spectrum referred to herein is typically allocated by a country or region for communication of radio equipment, and is generally considered to be a spectrum shared by communication devices in different communication systems. That is to say, communication devices in different communication systems can use this spectrum as long as they meet the regulatory requirements set by the country or region for this spectrum, without the need to apply to the government for exclusive spectrum authorization. To enable various communication systems using unlicensed spectrum for wireless communication to coexist harmoniously on this spectrum, some countries or regions have stipulated regulatory requirements that must be met when using unlicensed spectrum. For example, communication devices follow the "listen before talk" (LBT) principle, meaning that before a communication device transmits signals on a channel in the unlicensed spectrum, it must first perform channel listening. The communication device can only transmit signals when the channel listening result indicates that the channel is idle. If the channel listening result for a communication device on a channel in the unlicensed spectrum indicates that the channel is busy, then the communication device cannot transmit signals. For example, to ensure fairness, the duration of signal transmission by a communication device using a channel in the unlicensed spectrum during a single transmission cannot exceed a certain length of time. For example, to prevent the power of signals transmitted on a channel in the unlicensed spectrum from being too high and affecting the transmission of other important signals on that channel, communication devices are required to follow the maximum power spectral density limit when transmitting signals on a channel in the unlicensed spectrum.

The sub-carrier spacing of the FRX frequency band can be larger than that of FR2. At present, the candidate sub-carrier spacings for the FRX frequency band can include one or more of the following: 120kHz, 240kHz, 480kHz, 960kHz, 1.92MHz, 3.84MHz. Taking sub-carrier spacings of 120kHz, 480kHz, and 960kHz as examples, the corresponding numerologies for the above candidate sub-carrier spacings are illustrated in Table 3 below.

Table 3: Numerologies Corresponding to Candidate Sub-carrier Spacings

| Sub-Carrier Spacing | Symbol Length | Normal Cyclic Prefix(NCP)Length | Extended Cyclic Prefix(ECP)Length | Sum of Length of Symbol and NCP | Slot Length |
|---|---|---|---|---|---|
| 120kHz | 8.32μs | 0.586μs | 2.08μs | 8.906μs | 125μs |
| 480kHz | 2.08μs | 0.146μs | 0.52μs | 2.226μs | 31.25μs |
| 960kHz | 1.04μs | 0.073μs | 0.26μs | 1.113μs | 15.625μs |

To enhance the transmission rate of the sidelink communication system, it is possible to introduce a new frequency band into the sidelink communication system. This new frequency band could refer to the millimeter-wave band. Alternatively, it could refer to a band with frequencies higher than 52.6GHz, such as the FRX (or FR2-2) frequency band mentioned earlier, which ranges from 52.6GHz to 71GHz.

Different frequency bands may support different sub-carrier spacings. For example, FR1 can support sub-carrier spacings of 15kHz, 30kHz, and 60kHz. FR2-1 can support sub-carrier spacings of 60kHz and 120kHz. FRX can support sub-carrier spacings of 120kHz and above, such as 120kHz, 480kHz, and 960kHz.

Related technologies have defined slot structures corresponding to the following sub-carrier spacings: 15kHz, 30kHz, 60kHz, and 120kHz. However, when the sub-carrier spacing is greater than 120kHz, such as when it reaches 480kHz and 960kHz, how to design the slot structure for the sidelink communication system has not yet been discussed.

One possible slot structure design solution is to continue using the slot structures illustrated in FIG. 9A and FIG. 9B. However, careful study reveals that continuing to use the slot structures illustrated in FIG. 9A and FIG. 9B would make the communication process difficult to implement, for the following reasons.

As illustrated in FIG. 9A and FIG. 9B, in a slot used for sidelink communication, the 1st symbol is typically an AGC symbol, used for AGC adjustment or AGC training by the receiving device; the last symbol is used as a GP, usually for RX/TX switching or TX/RX switching by terminal devices. When the sub-carrier spacing is different, the duration of a symbol is different. For example, when the sub-carrier spacing is 15kHz, the duration of a symbol is approximately 66.7us. If we consider the duration of 4.69us corresponding to the CP, when the sub-carrier spacing is 15kHz, the total duration of a symbol is about 71us-72us. Similarly, when the sub-carrier spacing is 120kHz, the total duration of a symbol (the sum of the symbol and CP length) is about 8us-9us. Therefore, when the sub-carrier spacing is 120kHz, the AGC adjustment time does not exceed 8us-9us, and the RX/TX switching time or TX/RX switching time of the terminal device is about 7us.

The duration of the switching time in FR1 and FR2 (which can include FR2-1 and FR2-2 mentioned earlier) can be determined based on the following Table 4.

Table 4: RX/TX Switching Time and TX/RX Switching Time

|  | First Frequency Range (FR1) | Second Frequency Range (FR2) |
|---|---|---|
| TX/RX switching time | 25600 | 13792 |
| TX/RX switching time | 25600 | 13792 |

In Table 4, the numerical values represent the quantity of time units. The duration corresponding to a single time unit $T_c$ can be determined by $T_c = 1/(\Delta f_{max} \cdot N_f)$, where

$$\Delta f_{\max} = 480 \cdot 10^3 \text{Hz}, \quad N_f = 4096.$$

When the sub-carrier spacing exceeds 120kHz, the duration of a symbol continues to decrease. For instance, in a sidelink system, when a sub-carrier spacing is 480kHz, the duration of a symbol is approximately 2us-3us (as illustrated in Table 3); when a carrier spacing is 960kHz, the duration of a symbol is around 1 us (also illustrated in Table 3). It is evident that as the frequency increases, the duration of a symbol may become too short, making it difficult for the terminal device to complete AGC adjustment, RX/TX switching, or TX/RX switching within such a short time. Therefore, more symbols are needed for AGC adjustment and RX/TX switching (or TX/RX switching). However, if multiple symbols are used for AGC or GP, the number of symbols available for sidelink data transmission decreases significantly, thereby greatly reducing the transmission efficiency of the communication system.

To address the aforementioned issues, the disclosure proposes a time unit that can be used for sidelink transmission (detailed in Embodiment 1), which can include multiple slots, thereby alleviating the problems caused by the excessively short duration of symbols to a certain extent. For ease of description, the following mainly introduces the solution from the perspective of the first time unit. This first time unit can be a specific type of time unit used for sidelink communication. The sidelink communication procedure may involve the transmission of one or more of PSSCH, PSCCH, PSFCH, and S-SSB. To facilitate understanding, the sidelink transmission scheme based on the first time unit is introduced in conjunction with Embodiment 1.

## Embodiment 1: First Time Unit Including M1 Consecutive Slots

The first time unit can include *M1* consecutive slots (where *M1* is a positive integer greater than 1). This first time unit can also be understood as a slot structure based multi-slot. In some implementations, this first time unit can be referred to as: aggregate slot, slot aggregation, super slot, slot group, or multiple slot or multi-slot.

In some implementations, the value of *M1* can be determined based on one or more of the following: protocol predefined information, resource pool configuration information, sidelink BWP configuration information, or indication information from a terminal device. The terminal device can be either a transmitting device or a receiving device for sidelink data.

In some implementations, the *M1* slots included in the first time unit are *M1* consecutive physical slots. Physical slots are distinguished from logical slots. Typically, slots belonging to a resource pool are referred to as logical slots, while $10240 \cdot 2^{\mu_{SL}}$ slots included within one SFN duration (which includes 10240ms) are referred to as physical slots. $\mu_{SL}$ is a parameter related to the sidelink sub-carrier spacing, and the value of $\mu_{SL}$ can be determined based on Table 5.

Table 5

| $\mu_{SL}$ | Sub-Carrier Spacing |
| | $\Delta f = 2^\mu \cdot 15[kHz]$ |
| --- | --- |
| 0 | 15 |
| 1 | 30 |
| 2 | 60 |
| 3 | 120 |
| 5 | 480 |
| 6 | 960 |

Consecutive slots in a resource pool may not be consecutive physical slots. If $M1$ consecutive slots are set as $M1$ consecutive slots in the resource pool, slots belonging to other resource pools may be interspersed among the $M1$ slots. In this case, when performing transmission on the $M1$ slots, the terminal device may need to receive on slots belonging to other resource pools, leading to extra GP overhead for RX/TX switching. Thus, setting $M1$ slots as $M1$ consecutive physical slots can reduce GP overhead from RX/TX switching.

In some implementations, $M1$ slots included in the first time unit are consecutive slots available (usable) for sidelink transmission (slots in the resource pool are determined from slots that can be used for sidelink transmission).

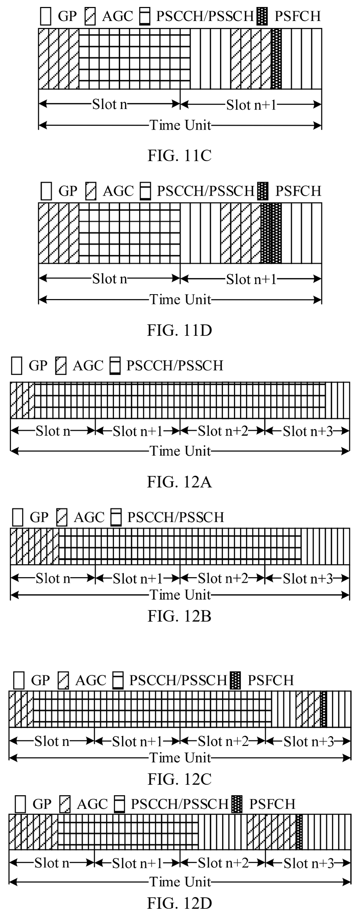

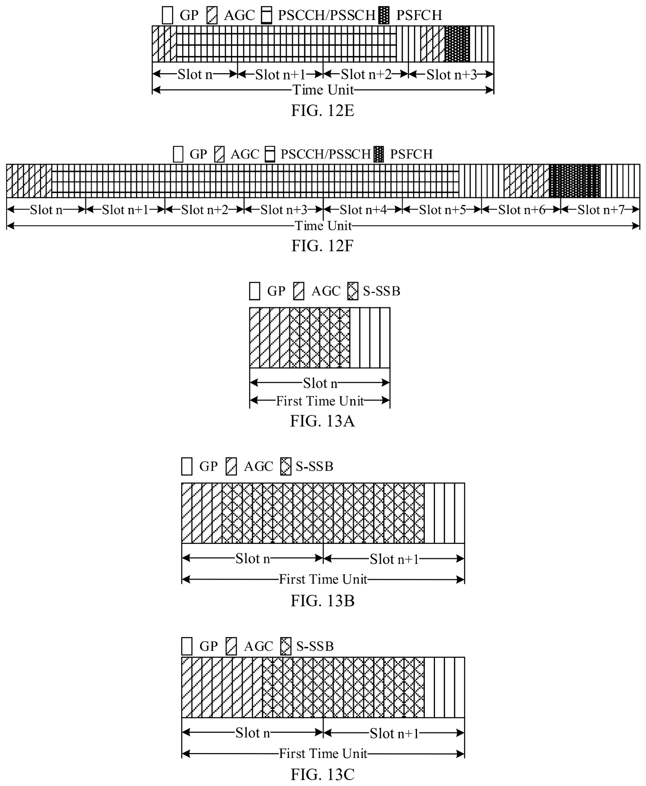

In some implementations, the first time unit can include PSCCH and PSSCH transmission resources. Alternatively, the first time unit can include PSCCH, PSSCH, and PSFCH transmission resources. Below, with reference to FIG. 11 and FIG. 12, examples will be given to illustrate the purpose of each symbol in the first time unit. As illustrated in FIG. 11 and FIG. 12, in the first time unit, the 1st symbol for transmission of PSCCH or PSSCH is the $(A+1)^{th}$ symbol in the first time unit. That is, the first $A$ symbols in the first time unit are for AGC and can be used for AGC adjustment or AGC training. The last $B1$ symbols in the first time unit are guard symbols or GP symbols.

FIG. 11A illustrates an example of the first time unit. In FIG. 11A, the first time unit includes two slots (slot $n$ and slot $n+1$ in FIG. 11A), i.e., $M1 = 2$. In these two slots, the first four symbols are used for AGC, and the last four symbols are used for GP. The first time unit illustrated in FIG. 11A can be applied to cases where the sidelink sub-carrier spacing is 480kHz.

FIG. 11B illustrates another example of the first time unit. In FIG. 11B, the first time unit includes two slots (slot $n$ and slot $n+1$ in FIG. 11B), i.e., $M1 = 2$. In these two slots, the first eight symbols are used for AGC, and the last eight symbols are used for GP. The first time unit illustrated in FIG. 11B can be applied to cases where the sidelink sub-carrier spacing is 480kHz or 960kHz.

FIG. 11C illustrates another example of the first time unit. In FIG. 11C, the first time unit includes two slots (slot $n$ and slot $n+1$ in FIG. 11C), i.e., $M1 = 2$. In these two slots, the first four symbols are used for AGC, and the last four symbols are used for GP. This first time unit also includes PSFCH transmission resources. The PSFCH transmission resources occupy five symbols, one of which is used to for transmission of sidelink feedback information (such as hybrid automatic repeat request (HARQ) information) or conflict indication information, and the remaining four symbols are used for AGC. In addition, there are four symbols used for GP before the symbols corresponding to the PSFCH transmission resources. The first time unit with the slot structure illustrated in FIG. 11C can be applied to cases where the sidelink sub-carrier spacing is 480kHz.

FIG. 11D illustrates another example of the first time unit. In FIG. 11D, the first time unit includes two slots (slot $n$ and slot $n+1$ in FIG. 11D), i.e., $M1 = 2$. In these two slots, the first four symbols are used for AGC, and the last four symbols are used for GP. This first time unit also includes PSFCH transmission resources. The PSFCH transmission resources occupy six symbols, two of which are used to for transmission of sidelink feedback information (such as HARQ information) or conflict indication information, and the remaining four symbols are used for AGC. In addition, there are four symbols used for GP before the symbols corresponding to the PSFCH transmission resources. The first time unit with the slot structure illustrated in FIG. 11D can be applied to cases where the sidelink sub-carrier spacing is 480kHz.

FIG. 12A illustrates another example of the first time unit. In FIG. 12A, the first time unit includes four slots (slots $n$, $n+1$, $n+2$, and $n+3$ in FIG. 12A), i.e., $M1 = 4$. In these four slots, the first four symbols are used for AGC, and the last four symbols are used for GP. The first time unit with the slot structure illustrated in FIG. 12A can be applied to cases where the sidelink sub-carrier spacing is 480kHz.

FIG. 12B illustrates another example of the first time unit. In FIG. 12B, the first time unit includes four slots (slots $n$, $n+1$, $n+2$, and $n+3$ in FIG. 12B), i.e., $M1 = 4$. In these four slots, the first eight symbols are used for AGC, and the last eight symbols are used for GP. The first time unit with the slot structure illustrated in FIG. 12B can be applied to cases where the sidelink sub-carrier spacing is 480kHz or 960kHz.

FIG. 12C illustrates another example of the first time unit. In FIG. 12C, the first time unit includes four slots (slots $n$,

*n+1, n+2,* and *n+3* in FIG. 12C), i.e., *M1* = 4. In these four slots, the first four symbols are used for AGC, and the last four symbols are used for GP. This first time unit also includes PSFCH transmission resources. The PSFCH transmission resources occupy five symbols, one of which is used to for transmission of sidelink feedback information (such as HARQ information) or conflict indication information, and the remaining four symbols are used for AGC. In addition, there are four symbols used for GP before the symbols corresponding to the PSFCH transmission resources. The first time unit with the slot structure illustrated in FIG. 12C can be applied to cases where the sidelink sub-carrier spacing is 480kHz.

FIG. 12D illustrates another example of the first time unit. In FIG. 12D, the first time unit includes four slots (slots *n, n+1, n+2,* and *n+3* in FIG. 12D), i.e., *M1* = 4. In these four slots, the first eight symbols are used for AGC, and the last eight symbols are used for GP. This first time unit also includes PSFCH transmission resources. The PSFCH transmission resources occupy nine symbols, one of which is used for transmission of sidelink feedback information (such as HARQ information) or conflict indication information, and the remaining eight symbols are used for AGC. In addition, there are eight symbols used for GP before the symbols corresponding to the PSFCH transmission resources. The first time unit with the slot structure illustrated in FIG. 12D can be applied to cases where the sidelink sub-carrier spacing is 480kHz or 960kHz.

FIG. 12E illustrates another example of the first time unit. In FIG. 12E, the first time unit includes four slots (slots *n, n+1, n+2,* and *n+3* in FIG. 12E), i.e., *M1* = 4. In these four slots, the first four symbols are used for AGC, and the last four symbols are used for GP. This first time unit also includes PSFCH transmission resources. The PSFCH transmission resources occupy eight symbols, four of which are used for transmission of sidelink feedback information (such as HARQ information) or conflict indication information, and the remaining four symbols are used for AGC. In addition, there are four symbols used for GP before the symbols corresponding to the PSFCH transmission resources. The first time unit with the slot structure illustrated in FIG. 12E can be applied to cases where the sidelink sub-carrier spacing is 480kHz. The structure in FIG. 12E can be understood as a multi-slot time unit structure obtained by proportionally expanding the single-slot structure corresponding to a 120kHz sub-carrier spacing by four times.

FIG. 12F illustrates another example of the first time unit. In FIG. 12F, the first time unit includes eight slots (slots *n* to *n+7* in FIG. 12F), i.e., *M1* = 8. In these eight slots, the first eight symbols are used for AGC, and the last eight symbols are used for GP. This first time unit also includes PSFCH transmission resources. The PSFCH transmission resources occupy 16 symbols, eight of which are used to transmit sidelink feedback information (such as HARQ information), and the remaining eight symbols are used for AGC. In addition, there are eight symbols used for GP before the symbols corresponding to the PSFCH transmission resources. The first time unit with the slot structure illustrated in FIG. 12F can be applied to cases where the sidelink sub-carrier spacing is 480kHz or 960kHz. The structure in FIG. 12F can be understood as a multi-slot time unit structure obtained by proportionally expanding the single-slot structure corresponding to a 120kHz sub-carrier spacing by eight times.

In some implementations, the first time unit may include transmission resources for S-SSB. The following describes, with reference to FIG. 13, an example of the purposes of symbols in the first time unit. In the first time unit illustrated in FIG. 13, the 1st symbol for S-SSB transmission is the $(A+1)^{th}$ symbol in the first time unit. That is, the first *A* symbols in the first time unit are AGC symbols, which can be used for AGC adjustment or AGC training, and the last *B1* symbols in the first time unit are guard symbols or GP symbols.

Referring to FIG. 13A, the first time unit includes one slot, i.e., *M=1.* The first four symbols in the slot are used for AGC, i.e., *A*=4. The last four symbols in the slot are used as a guard period, i.e., *B*=4. The remaining symbols in the slot can be used for S-SSB transmission. That is, the time-domain resources used for S-SSB transmission span from the $5^{th}$ symbol of slot n to the $5^{th}$-to-last symbol of slot *n*. The first time unit with the slot structure illustrated in FIG. 13A may be applied to cases where a sidelink subcarrier spacing is 480 kHz.

Referring to FIG. 13B, the first time unit includes two slots: slot *n* and slot *n+1,* i.e., *M=2.* In slot *n,* the first four symbols are used for AGC, i.e., *A=4.* In slot *n+1,* the last four symbols are used as a guard period, i.e., B=4. The remaining symbols in slot *n* and slot *n+1* can be used for S-SSB transmission. That is, the time-domain resources used for S-SSB transmission span from the $4^{th}$ symbol of slot *n* to the $10^{th}$ symbol (i.e., the $4^{th}$-to-last symbol) of slot *n+1.* The first time unit with the slot structure illustrated in FIG. 13B may be applied to cases where the sidelink subcarrier spacing is 480 kHz.

Referring to FIG. 13C, the first time unit includes two slots: slot *n* and slot *n+1,* i.e., *M=2.* In slot *n,* the first eight symbols are used for AGC, i.e., *A=8.* In slot *n+1,* the last four symbols are used as a guard period, i.e., *B=4.* The remaining symbols in slot *n* and slot *n+1* can be used for S-SSB transmission. That is, the time-domain resources used for S-SSB transmission span from the $9^{th}$ symbol of slot *n* to the $10^{th}$ symbol (i.e., the $5^{th}$-to-last symbol) of slot *n+1.* The first time unit with the slot structure illustrated in FIG. 13C may be applied to cases where the sidelink subcarrier spacing is 480 kHz.

Referring to FIG. 13D, the first time unit includes two slots: slot *n* and slot *n+1,* i.e., *M=2.* In slot *n,* the first eight symbols are used for AGC, i.e., *A=8.* In slot *n+1,* the last eight symbols are used as a guard period, i.e., *B=8.* The remaining symbols in slot *n* and slot *n+1* can be used for S-SSB transmission. That is, the time-domain resources used for S-SSB transmission span from the $5^{th}$ symbol of slot *n* to the $10^{th}$ symbol (i.e., the $5^{th}$-to-last symbol) of slot *n+1.* The first time unit with the slot structure illustrated in FIG. 13D can be applied to cases where the sidelink subcarrier spacing is 480 kHz.

Referring to FIG. 13E, the first time unit includes four slots: slot *n* to slot *n+3,* i.e., *M=4.* In slot *n,* the first four symbols are used for AGC, i.e., *A*=4. In slot *n+3,* the last four symbols are used as a guard period, i.e., *B*=4. The remaining symbols in slot *n* to slot *n+3* can be used for S-SSB transmission. That is, the time-domain resources used for S-SSB transmission span from the 5th symbol of slot *n* to the 5th-to-last symbol (i.e., the 10th symbol) of slot *n+3.* The first time unit with the slot structure illustrated in FIG. 13D can be applied to cases where a sidelink subcarrier spacing is 480 kHz.

Referring to FIG. 13F, the first time unit includes four slots: slot *n* to slot *n+3,* i.e., *M=4.* In slot *n,* the first eight symbols are used for AGC, i.e., *A*=8. In slot *n+3,* the last eight symbols are used as a guard period, i.e., *B*=8. The remaining symbols in slot *n* to slot *n+3* can be used for S-SSB transmission. That is, the time-domain resources used for S-SSB transmission span from the 8th symbol of slot *n* to the 6th-to-last symbol (i.e., the 9th symbol) of slot *n+3.* The first time unit with the slot structure illustrated in FIG. 13E can be applied to cases where the sidelink subcarrier spacing is 480 kHz or 960 kHz.

In other implementations, S-SSB may be transmitted based on a second time unit, where the second time unit may include *M2* consecutive slots, and *M2* is an integer greater than or equal to 1. The second time unit may be understood as a type of time unit in sidelink transmission. The scheme for S-SSB transmission based on the second time unit is similar to the scheme for S-SSB transmission based on the first time unit described above, and reference may be made to the foregoing description.

It should be noted that, in the embodiments of the disclosure, the number of slots included in the first time unit and the number of slots included in the second time unit may be the same. In this case, the first time unit and the second time unit may be understood as the same type of time unit. Of course, in some implementations, the number of slots included in the first time unit and the number of slots included in the second time unit may be different. In this case, the first time unit and the second time unit may be understood as different types of time units. This is not limited in the embodiments of the disclosure.

### Embodiment 1.1: Guard Symbols in the First Time Unit

The guard symbols may also be referred to as symbols used for GP. In some implementations, the guard symbols may be used for a terminal device to perform TX/RX switching or RX/TX switching. In some implementations, no data may be mapped on the guard symbols.

In some implementations, the first time unit may include a first guard symbol(s). The first guard symbol includes *B1* consecutive symbols, and the *B1* symbols are the last *B1* symbols of the first time unit, where *B1* is a positive integer greater than 1.

In some implementations, the first time unit may include the first guard symbol. The first guard symbol includes *B1* consecutive symbols, and the *B1* symbols are the last *B1* symbols available for sidelink transmission in the first time unit, where *B1* is a positive integer greater than 1.

In some implementations, the first guard symbols are located in the last slot of the first time unit.

In some implementations, if the first time unit includes time-domain resource 1 for PSFCH transmission, the first time unit may include a second guard symbol(s). The second guard symbol includes *B2* consecutive symbols, where *B2* is a positive integer greater than 1. The *B2* symbols in the second guard symbol may be located before time-domain resource 1. The *B2* symbols may be adjacent to time-domain resource 1, meaning that the last symbol of the *B2* symbols and the first symbol of time-domain resource 1 are adjacent symbols in the first time unit.

In some implementations, the second guard symbol(s) is located in the last slot and/or the second-to-last slot of the first time unit.

In some implementations, the values of *B1* and *B2* are the same. For example, both *B1* and *B2* are equal to *B,* where *B* is a positive integer greater than 1. In other implementations, the values of *B1* and *B2* are different. For example, *B1* may be greater than *B2,* or *B2* may be greater than *B1*.

The following describes in detail the method for determining the value of *B.* It should be understood that the method for determining the value of *B* may apply to *B1* as mentioned earlier, as well as to *B2* as mentioned earlier.

In some implementations, B=4. Further, in some implementations, if *B=4,* the sidelink subcarrier spacing corresponding to the first time unit is 480 kHz. For example, in the time unit examples illustrated in FIG. 11A, FIG. 11C, FIG. 11D, FIG. 12A, FIG. 12C, FIG. 12E, FIG. 13A, FIG. 13B, and FIG. 13E, *B=4.*

In some implementations, *B*=8. Further, in some implementations, if *B*=8, the sidelink subcarrier spacing corresponding to the first time unit is 480 kHz or 960 kHz. For example, in the time unit examples illustrated in FIG. 11B, FIG. 12B, FIG. 12D, FIG. 12F, FIG. 13C, FIG. 13D, and FIG. 13F, *B*=8.

In some implementations, the value of *B* is determined based on one or more of the following: protocol predefined information; resource pool configuration information; sidelink BWP configuration information; or indication information from a terminal device. The terminal device may be a transmitting device or a receiving device for sidelink data.

In some implementations, the value of *B* may be determined based on first indication information. The first indication information may indicate one or more of the following: the value of *B*; the time-domain position of the 1st symbol available for sidelink transmission in a slot or a time unit (the time unit mentioned in the embodiments of the disclosure may refer to a time unit including *M1* consecutive slots or a time unit including *M1* consecutive slots available for sidelink transmission, which will not be repeated hereafter); the length or number of symbols available for sidelink transmission in a time unit; or the number of slots included in a time unit.

As an example, the first indication information may directly indicate the value of *B.* Alternatively, the value of *B* may be determined based on the value indicated by the first indication information.

As another example, the first indication information may include information 1 and information 2. Information 1 indicates the time-domain position of the 1st symbol available for sidelink transmission in a slot or a time unit. Information 2 indicates the length or number of symbols available for sidelink transmission in a time unit. Based on information 1 and information 2, the value of *B* can be determined. For example, information 1 indicates that the 1st symbol available for sidelink transmission in a time unit is symbol 0, information 2 indicates that the number of symbols available for sidelink transmission in a time unit is 24. According to information 1 and information 2, assuming that the first time unit includes two slots, under normal CP, the first time unit includes 28 symbols. Therefore, the number of symbols used for GP is 4, meaning B=4.

As yet another example, the first indication information may include information 3, which indicates the length or number of symbols available for sidelink transmission in a time unit. Based on information 3, the value of *B* can be determined. For example, information 3 indicates that the number of symbols available for sidelink transmission in a time unit is 24. The value indicated by information 3 is greater than the number of symbols in one slot but less than the number of symbols in two slots. Thus, it can be assumed that the first time unit includes two slots, both available for sidelink transmission. Under normal CP, two slots include 28 symbols in total, so the number of GP symbols is 4, meaning *B*=4 (in this example, it is assumed that the starting symbol corresponding to sidelink transmission resources in the first time unit is the 1st symbol of the first time unit).

As yet another example, the first indication information may include information 4 and information 5. Information 4 indicates the length or number of symbols available for sidelink transmission in a time unit. Information 5 indicates the number of slots included in a time unit. Based on information 4 and information 5, the value of *B* can be determined. For example, Information 4 indicates that the number of symbols available for sidelink transmission in a time unit is 24. Information 5 indicates that a time unit includes two slots. Under normal CP, two slots include 28 symbols in total, so the number of GP symbols is 4, meaning *B*=4 (in this example, it is assumed that the starting symbol corresponding to sidelink transmission resources in the first time unit is the 1st symbol of the first time unit).

In some implementations, the first indication information may be included in resource pool configuration information or sidelink BWP configuration information. Alternatively, the first indication information may be indicated by a terminal device. The terminal device may be a transmitting device or a receiving device for sidelink data.

In some implementations, the value of *B* may be determined based on a first sidelink subcarrier spacing and a second sidelink subcarrier spacing. The first sidelink subcarrier spacing and the second sidelink subcarrier spacing are different.

In some implementations, the first sidelink subcarrier spacing may be greater than the second sidelink subcarrier spacing.

In some implementations, the first sidelink subcarrier spacing is a sidelink subcarrier spacing corresponding to the first time unit.

In some implementations, the first subcarrier spacing is determined based on protocol predefined information, resource pool configuration information, or sidelink BWP configuration information. For example, if the first sidelink subcarrier spacing is determined based on the sidelink BWP configuration information, the sidelink BWP configuration information may be used to configure the BWP corresponding to the first time unit.

In some implementations, the second subcarrier spacing is determined based on protocol predefined information, resource pool configuration information, or sidelink BWP configuration information. The second subcarrier spacing may also be referred to as a reference subcarrier spacing.

In some implementations, the first sidelink subcarrier spacing is 480 kHz or 960 kHz.

In some implementations, the second subcarrier spacing is 15 kHz, 30 kHz, 60 kHz, or 120 kHz.

For example, the first sidelink subcarrier spacing is denoted as $\mu_{SL1}$, the second sidelink subcarrier spacing is denoted as $\mu_{SL2}$, and *B* satisfies: $B = \dfrac{2^{\mu_{SL1}}}{2^{\mu_{SL2}}}$. Assuming $\mu_{SL1} = 5$ and $\mu_{SL2} = 3$, i.e., the first sidelink subcarrier spacing is 480 kHz and the second sidelink subcarrier spacing is 120 kHz, in this case, *B*=4. Assuming $\mu_{SL1} = 6$ and $\mu_{SL2} = 3$, i.e., the first sidelink subcarrier spacing is 960 kHz and the second sidelink subcarrier spacing is 120 kHz, in this case, *B=8.*

In some implementations, at least one slot among the *M1* slots included in the first time unit does not include a guard symbol(s). As one implementation, the remaining slots among the *M1* slots included in the first time unit, except the last slot, do not include the guard symbol.

For example, in FIG. 11A and FIG. 11B, the first time unit includes two slots, i.e., slot *n* and slot *n+1*. Slot *n+1* includes guard symbols used for GP, while slot *n* does not include guard symbols used for GP.

As another example, in FIG. 12A and FIG. 12B, the first time unit includes 4 slots, i.e., slot *n*, slot *n+1*, slot *n+2*, and slot *n+3*. Slot *n*+3 includes guard symbols used for GP, while slots *n, n+1,* and *n+2* do not include guard symbols used for GP.

In some implementations, if the first time unit includes time-domain resources for transmitting PSFCH, the last slot and/or the second-to-last slot among the *M1* slots includes guard symbols. Further, in some implementations, the remaining slots among the *M1* slots, except the last slot and/or the second-to-last slot, do not include guard symbols.

**Embodiment 1.2: Time-Frequency Resources for PSCCH in the First Time Unit**

In some implementations, the first time unit includes time-domain resources for transmitting PSCCH. The starting symbol of the time-domain resources for transmitting PSCCH is the $(A+1)^{th}$ symbol of the first time unit, where *A* is a positive integer greater than 1.

In some implementations, *A*=4. Further, in some implementations, if *A*=4, the sidelink subcarrier spacing corresponding to the first time unit is 480 kHz. For example, in the time unit examples illustrated in FIG. 11A, FIG. 11C, FIG. 11D, FIG. 12A, FIG. 12C and FIG. 12E, *A*=4.

In some implementations, A=8. Further, in some implementations, if *A*=8, the sidelink subcarrier spacing corresponding to the first time unit is 480 kHz or 960 kHz. For example, in the time unit examples illustrated in FIG. 11B, FIG. 12B, FIG. 12D and FIG. 12F, *A*=8.

In some implementations, the value of A is determined based on one or more of: protocol predefined information; resource pool configuration information; sidelink BWP configuration information; or indication information from a terminal device. The terminal device may be a transmitting device or a receiving device for sidelink data.

In some implementations, the value of A is determined based on second indication information. For example, the second indication information may indicate one or more of: the value of A; the time-domain position of the $1^{st}$ symbol available for transmitting PSSCH in a time unit; the time-domain position of the $1^{st}$ symbol available for transmitting PSCCH in a time unit; the time-domain position of the $1^{st}$ symbol for mapping PSSCH in a time unit; the time-domain position of the $1^{st}$ symbol for mapping PSCCH in a time unit; the time-domain position of the $1^{st}$ symbol for PSSCH resource allocation in a time unit; the time-domain position of the $1^{st}$ symbol for PSCCH resource allocation in a time unit; and the time-domain position of the $1^{st}$ symbol available for sidelink transmission in a slot or a time unit.

As an example, the second indication information directly indicates the value of A. Alternatively, the value of *A* is determined based on a value indicated by the second indication information.

As another example, the second indication information indicates the time-domain position of the $1^{st}$ symbol available for transmitting PSSCH or PSCCH in a time unit. Based on this second indication information, the value of *A* can be determined. For example, if the second indication information indicates that the $1^{st}$ symbol for PSSCH is the $5^{th}$ symbol in the first time unit, then *A*=4 (in this example, it is assumed that the starting symbol corresponding to the sidelink transmission resources in the first time unit is the $1^{st}$ symbol of the first time unit).

As yet another example, the second indication information may indicate information 6 and information 7. Information 6 may indicate the time-domain position of the $1^{st}$ symbol available for transmitting PSSCH or PSCCH in a time unit. Information 7 may indicate the time-domain position of the $1^{st}$ symbol available for sidelink transmission in a slot or a time unit. Based on information 6 and information 7, the value of A can be determined. For example, information 6 indicates that the time-domain position of the $1^{st}$ symbol available for transmitting PSSCH is symbol 6, and information 7 indicates that the time-domain position of the $1^{st}$ symbol available for sidelink transmission in a slot is symbol 2. Based on information 6 and information 7, it can be determined that A=4.

In some implementations, the second indication information may be included in resource pool configuration information or sidelink BWP configuration information. Alternatively, the second indication information may be indication information from a terminal device. The terminal device may be a transmitting device or a receiving device for sidelink data.

In some implementations, the value of A is determined based on a third sidelink subcarrier spacing and a fourth sidelink subcarrier spacing. The third sidelink subcarrier spacing and the fourth sidelink subcarrier spacing are different.

In some implementations, the third sidelink subcarrier spacing may be greater than the fourth sidelink subcarrier spacing.

In some implementations, the third sidelink subcarrier spacing is the sidelink subcarrier spacing corresponding to the first time unit.

In some implementations, the third sidelink subcarrier spacing is determined based on sidelink BWP configuration information, where the sidelink BWP configuration information is used to configure the BWP corresponding to the first time unit.

In some implementations, the third subcarrier spacing is determined based on protocol predefined information, resource pool configuration information, or sidelink BWP configuration information.

In some implementations, the third sidelink subcarrier spacing is 480 kHz or 960 kHz.

In some implementations, the fourth sidelink subcarrier spacing is 15 kHz, 30 kHz, 60 kHz or 120 kHz.

In some implementations, the third sidelink subcarrier spacing equals the first sidelink subcarrier spacing mentioned above; and/or, the fourth sidelink subcarrier spacing equals the second sidelink subcarrier spacing mentioned above.

For example, the third sidelink subcarrier spacing is denoted as $\mu_{SL3}$, the fourth sidelink subcarrier spacing is denoted as $\mu_{SL4}$, and $A$ satisfies: $A = \frac{2^{\mu_{SL3}}}{2^{\mu_{SL4}}}$. Assuming $\mu_{SL3} = 5$ and $\mu_{SL4} = 3$, i.e., the third sidelink subcarrier spacing is 480 kHz and the fourth sidelink subcarrier spacing is 120 kHz, in this case, $A=4$. Assuming $\mu_{SL3} = 6$ and $\mu_{SL4} = 3$, i.e., the third sidelink subcarrier spacing is 960 kHz and the fourth sidelink subcarrier spacing is 120 kHz, in this case, $A=8$.

In some implementations, the first $A$ symbols (or the first $A$ symbols available for sidelink transmission) of the first time unit are used for AGC.

In some implementations, data on the first $A$ symbols (or the first $A$ symbols available for sidelink transmission) of the first time unit is a repetition of data on target symbols in the first time unit. The target symbols may include one or more symbols among the remaining symbols of the first time unit other than the first $A$ symbols.

In some implementations, the target symbols are the $(A+1)^{th}$ to $2A^{th}$ symbols of the first time unit. That is, the data on the first $A$ symbols of the first time unit is repetition of the data on the $(A+1)^{th}$ to $2A^{th}$ symbols of the first time unit. For example, the data on the $1^{st}$ symbol of the first time unit is a repetition of the data on the $(A+1)^{th}$ symbol of the first time unit; the data on the $2^{nd}$ symbol of the first time unit is repetition of the data on the $(A+2)^{th}$ symbol of the first time unit; and so on, the data on the $A^{th}$ symbol of the first time unit is repetition of the data on the $2A^{th}$ symbol of the first time unit.

In some implementations, the target symbol is the $(A+1)^{th}$ symbol of the first time unit. That is, the data on the first $A$ symbols of the first time unit are all repetition of the data on the $(A+1)^{th}$ symbol of the first time unit. Thus, in this implementation, the first $A$ symbols and the $(A+1)^{th}$ symbol of the first time unit are used to transmit the same data.

In some implementations, the time-domain resource 2 includes $P$ consecutive symbols. The value of $P$ may be a positive integer greater than or equal to 1. For example, $P=3$.

In some implementations, the value of $P$ is determined based on one or more of: protocol predefined information; resource pool configuration information; sidelink BWP configuration information; or indication information from a terminal device. The terminal device may be a transmitting device or a receiving device for sidelink data.

In some implementations, when PSCCH is transmitted in the first time unit, the PSCCH may occupy $Q$ PRBs in the frequency domain, where $Q$ is a positive integer greater than or equal to 1.

In some implementations, the value of $Q$ is determined based on one or more of: protocol predefined information; resource pool configuration information; sidelink BWP configuration information; or indication information from a terminal device. The terminal device may be a transmitting device or a receiving device for sidelink data.

In some implementations, the PSCCH may be used to schedule PSSCH, and the frequency-domain starting position of the $Q$ PRBs may be the same as the frequency-domain starting position of the PSSCH.

In some implementations, the PSCCH may be used to schedule PSSCH, and the $Q$ PRBs are located in the $1^{st}$ sub-channel corresponding to the transmission resources of the PSSCH.

## Embodiment 1.3: Time-frequency Resources For PSSCH in the First Time Unit

In some implementations, the first time unit includes time-domain resources used for transmitting PSSCH. The starting symbol of the time-domain resources for transmitting PSSCH can be the $(A+1)^{th}$ symbol of the first time unit, where $A$ is a positive integer greater than 1.

In some implementations, the first time unit includes time-domain resources used for transmitting the PSSCH. The starting symbol of the time-domain resources for transmitting PSSCH can be the $(A+1)^{th}$ symbol available for sidelink transmission within the first time unit, where A is a positive integer greater than 1.

The method for determining the value of $A$ can refer to the description in Embodiment 1.2, which is not repeated here for the sake of brevity. Alternatively, in some embodiments, in Embodiment 1.2, $A$ can be $A1$, and in Embodiment 1.3, $A$ can be $A2$. $A1$ and $A2$ can be the same or different.

In some implementations, if the first time unit does not include PSFCH transmission resources, the end symbol of time-domain resource 3 is the symbol immediately preceding the first guard symbol. The relevant description of the first guard symbol can refer to Embodiment 1.1 in the preceding text, which is not repeated here. For example, in FIG. 11A, the time-domain resources of the PSSCH include the symbols from the $5^{th}$ symbol of slot $n$ to the $5^{th}$-to-last symbol of slot $n+1$. In FIG. 11B, the time-domain resources of the PSSCH include the symbols from the $9^{th}$ symbol of slot $n$ to the $6^{th}$ symbol (i.e., the $9^{th}$-to-last symbol) of slot $n+1$. In FIG. 12A, the time-domain resources of the PSSCH include the symbols from the $5^{th}$ symbol of slot $n$ to the $5^{th}$-to-last symbol of slot $n+3$. In FIG. 12B, the time-domain resources of the PSSCH include the symbols from the $9^{th}$ symbol of slot $n$ to the $6^{th}$ symbol (i.e., the $9^{th}$-to-last symbol) of slot $n+3$.

In some implementations, the end symbol of time-domain resource 3 is the last symbol available for transmitting the PSSCH within the first time unit.

In some implementations, if the first time unit includes PSFCH transmission resources, the end symbol of time-domain resource 3 is the symbol immediately preceding the second guard symbol. The relevant description of the second guard symbol can refer to Embodiment 1.1 in the preceding text, which is not repeated here. For example, in FIG. 11C, the time-domain resources of the PSSCH include the symbols from the 5th symbol of slot $n$ to the 1st symbol of slot $n+1$. In FIG. 12C, the time-domain resources of the PSSCH include the symbols from the 5th symbol of slot $n$ to the 1st symbol of slot $n+3$. In FIG. 12D, the time-domain resources of the PSSCH include the symbols from the 9th symbol of slot $n$ to the 3rd symbol of slot $n+2$.

## Embodiment 2

As introduced in the related art, currently, the time-domain resources of a resource pool are determined by using a bitmap at the granularity of a slot to indicate whether the corresponding time-domain resources belong to the resource pool. That is to say, assuming that the number of slots within an SFN duration is $(10240 \cdot 2^{\mu})$, the bitmap can be periodically repeated within the SFN duration to indicate the slots that belong to the resource pool within that SFN duration. For example, slots corresponding to bits with a value of 1 in the bitmap belong to the resource pool. Conversely, slots corresponding to bits with a value of 0 in the bitmap do not belong to the resource pool. However, this scheme of indicating whether time-domain resources belong to a resource pool based on a bitmap at the granularity of a single slot is not applicable to the sidelink transmission based on the first time unit.

Therefore, in view of the above problem, embodiments of the disclosure provide a scheme for indicating whether time-domain resources within an SFN duration belong to a resource pool, which is helpful for matching with a transmission scheme that perform sidelink transmission at the granularity of the first time unit. For ease of understanding, the method of the embodiments is introduced in conjunction with FIG. 14.

FIG. 14 is a schematic flowchart of the method for sidelink transmission according to embodiments of the disclosure. The method illustrated in FIG. 14 can include step S1410.

In step S1410, the first terminal device determines first information, where the first information is used to indicate time-domain resources belonging to a resource pool within one SFN duration.

In some implementations, the first information may include a bitmap, or the first information may be used to indicate a bitmap. Accordingly, the time-domain resources belonging to the resource pool within the SFN duration may be determined based on the bitmap.

In some implementations, the first information may indicate whether corresponding time-domain resources belong to the resource pool at the granularity of the first time unit, in other words, one bit in the first information may correspond to one first time unit within the SFN duration. For example, a target bit in the first information may correspond to a first time unit within the SFN duration. Accordingly, when the value of the target bit is 1, the first time unit corresponding to the target bit belongs to the resource pool. In the embodiments of the disclosure, the first information may also indicate whether the time-domain resources within the SFN duration belong to the resource pool at the granularity of slots.

In some implementations, the resource pool may be used for transmitting PSCCH and/or PSSCH based on the first time unit, where the first time unit includes $M1$ consecutive slots, and $M1$ is a positive integer greater than 1. The scheme for transmitting PSCCH and/or PSSCH in units of the first time unit may refer to the description of Embodiment 1 above.

In some implementations, the sidelink transmission includes S-SSB transmission, where the S-SSB transmission can be S-SSB transmission based on the first time unit or S-SSB transmission based on a second time unit. The scheme for S-SSB transmission based on the first time unit or the second time unit may refer to the description of Embodiment 1 above.

It should be noted that embodiments of the disclosure do not limit the time-domain resources. For example, the time-domain resources may include slots. As another example, the time-domain resources may include symbols. The time-domain resources may also include other time-domain resource granularities defined in future communication systems.

For ease of understanding, the following describes the sidelink transmission scheme of the embodiments of the disclosure with reference to Embodiment 2-1 and Embodiment 2-2, taking the S-SSB transmission based on the first time unit and the S-SSB transmission based on the second time unit as examples, respectively.

## Embodiment 2-1: S-SSB transmission based on the First Time Unit

In some scenarios, within an SFN duration, time-domain resources that cannot be used for sidelink transmission (also referred to as "second time-domain resources," where the number of time-domain resources included in such resources is denoted as $"N_{nonSL}"$), time-domain resources used for S-SSB transmission (also referred to as "first time-domain resources," where the number of time-domain resources included in such resources is denoted as $"N_{S-SSB}"$), and reserved time-domain resources (also referred to as "third time-domain resources," where the number of time-domain resources included in such resources is denoted as $"N_{reserved}"$) may not belong to the resource pool. Therefore, when indicating the time-domain resources belonging to the resource pool, one or more of the above resources must also be considered.

In other words, assuming that a first set includes multiple first time units, the time-domain resources belonging to the resource pool are determined from the first set, and the first set is determined based on one or more of the following: the first time-domain resources, the second time-domain resources, and the third time-domain resources.

In some implementations, if the 1st symbol that can be used for sidelink transmission in a slot is the 1st symbol of the slot, then the number of slots within the SFN duration that cannot be used for sidelink transmission is 0, i.e., $N_{nonSL} = 0$.

It should be noted that the reserved time-domain resources may, for example, be reserved time units or reserved slots. Of course, in the embodiments of the disclosure, the reserved time-domain resources may also be reserved time-domain symbols, which is not limited in the disclosure.

Additionally, in the embodiments of the disclosure, $N_{nonSL}$, $N_{S-SSB}$, and $N_{reserved}$ may be integers greater than or equal to 0.

As described above, one or more of the first time-domain resources, the second time-domain resources, and the third time-domain resources do not belong to the resource pool. Therefore, when determining the first set, such time-domain resources that do not belong to the resource pool may be excluded from the time-domain resources within the SFN duration.

In some implementations, the number of first time units or the number of slots included in the first set may be determined based on one or more of the following: the number of slots included within one SFN duration, the number of slots included in the first time unit, the number of slots included in the first time-domain resources, the number of slots included in the second time-domain resources, the number of slots included in the third time-domain resources.

In other implementations, the number of first time units or the number of slots included in the first set may be determined based on one or more of the following: the number of first time units included within one SFN duration, the number of slots included in the first time unit, the number of first time units included in the first time-domain resources, the number of first time units included in the second time-domain resources, the number of first time units included in the third time-domain resources.

In some implementations, the number of first time units corresponding to the time-domain resources included within one SFN duration is $10240 \times 2^{\mu}/M1$, with an index range of $[0, 10240 \times 2^{\mu}/M1 - 1]$. If $N_{S-SSB}$ represents the number of first time units corresponding to the first time-domain resources, $N_{nonSL}$ represents the number of first time units corresponding to the second time-domain resources, and $N_{reserved}$ represents the number of first time units corresponding to the third time-domain resources, then the number of first time units included in the first set is: $10240 \times 2^{\mu}/M1 - N_{S-SSB} - N_{nonSL} - N_{reserved}$.

In some implementations, the number of first time units included in the first set may be determined based on a first quantity, where the first quantity is equal to: $10240 \times 2^{\mu}/M1 - N_{S-SSB} - N_{nonSL} - N_{reserved}$.

Here, $\mu$ represents a parameter determined based on the sidelink subcarrier spacing (the value of $\mu$ may refer to the description in Table 5, for example).

$N_{S-SSB}$ represents a parameter determined based on the number of first time units included in the first time-domain resources. In some implementations, $N_{S-SSB}$ may be equal to the number of first time units included in the first time-domain resources. In other implementations, $N_{S-SSB}$ may also be obtained based on the number of first time units included in the first time-domain resources, for example, obtained by multiplying the number of first time units included in the first time-domain resources by a weighting factor. In yet other implementations, $N_{S-SSB}$ may be obtained based on the number of slots included in the first time-domain resources, for example, obtained by dividing the number of slots included in the first time-domain resources by the number of slots included in the first time unit (i.e., $M1$). The embodiments of the disclosure do not impose specific limitations on the method for calculating $N_{S-SSB}$.

$N_{nonSL}$ represents a parameter determined based on the number of first time units included in the second time-domain resources. In some implementations, $N_{nonSL}$ may be equal to the number of first time units included in the second time-domain resources. In other implementations, $N_{nonSL}$ may also be obtained based on the number of first time units included in the second time-domain resources, for example, obtained by multiplying the number of first time units included in the second time-domain resources by a weighting factor. In yet other implementations, $N_{nonSL}$ may be obtained based on the number of slots included in the second time-domain resources, for example, obtained by dividing the number of slots included in the second time-domain resources by the number of slots included in the first time unit (i.e., $M1$). The embodiments of the disclosure do not impose specific limitations on the method for calculating $N_{nonSL}$.

$N_{reserved}$ represents a parameter determined based on the number of first time units included in the third time-domain resources. In some implementations, $N_{reserved}$ may be equal to the number of first time units included in the third time-domain resources. In other implementations, $N_{reserved}$ may also be obtained based on the number of first time units included in the third time-domain resources, for example, obtained by multiplying the number of first time units included in the third time-domain resources by a weighting factor. In yet other implementations, $N_{reserved}$ may be obtained based on the number of slots included in the third time-domain resources, for example, by dividing the number of slots included in the third time-domain resources by the number of slots included in the first time unit (i.e., M 1). The embodiments of the disclosure do not impose specific limitations on the method for calculating $N_{reserved}$.

In some implementations, the number of slots corresponding to the time-domain resources included within one SFN duration is $10240 \times 2^{\mu}$, with an index range of $[0, 10240 \times 2^{\mu} - 1]$. If $N_{S\text{-}SSB}$ represents the number of slots corresponding to the first time-domain resources, $N_{nonSL}$ represents the number of slots corresponding to the second time-domain resources, and $N_{reserved}$ represents the number of slots corresponding to the third time-domain resources, then the number of slots included in the first set is $10240 \times 2^{\mu} - N_{S\text{-}SSB} - N_{nonSL} - N_{reserved}$, the number of first time units included in the first set is $(10240 \times 2^{\mu} - N_{S\text{-}SSB} - N_{nonSL} - N_{reserved})/M1$.

In other implementations, the number of first time units included in the first set may be determined based on a third quantity, where the third quantity equals: $(10240 \times 2^{\mu} - N_{S\text{-}SSB} - N_{nonSL} - N_{reserved})/M1$.

Here, $\mu$ represents a parameter determined based on the sidelink subcarrier spacing (the value of $\mu$ may refer to the description in Table 5, for example).

$N_{S\text{-}SSB}$ represents a parameter determined based on the number of slots included in the first time-domain resources. In some implementations, $N_{S\text{-}SSB}$ may equal the number of slots included in the first time-domain resources. In other implementations, $N_{S\text{-}SSB}$ may be obtained based on the number of slots included in the first time-domain resources, for example, obtained by multiplying the number of slots included in the first time-domain resources by a weighting factor. In yet other implementations, $N_{S\text{-}SSB}$ may be obtained based on the number of first time units included in the first time-domain resources, for example, obtained by multiplying the number of first time units by the number of slots included in the first time unit (i.e., M1). The embodiments of the disclosure do not impose specific limitations on the method for calculating $N_{S\text{-}SSB}$.

$N_{nonSL}$ represents a parameter determined based on the number of slots included in the second time-domain resources. In some implementations, $N_{nonSL}$ may equal the number of slots included in the second time-domain resources. In other implementations, $N_{nonSL}$ may be obtained based on the number of slots included in the second time-domain resources, for example, obtained by multiplying the number of slots in the second time-domain resources by a weighting factor. In yet other implementations, $N_{nonSL}$ may be obtained based on the number of first time units included in the second time-domain resources, for example, obtained by multiplying the number of first time units in the second time-domain resources by the number of slots included in the first time unit (i.e., M1). The embodiments of the disclosure do not impose specific limitations on the method for calculating $N_{nonSL}$.

$N_{reserved}$ represents a parameter determined based on the number of slots included in the third time-domain resources. In some implementations, $N_{reserved}$ may equal the number of slots included in the third time-domain resources. In other implementations, $N_{reserved}$ may be obtained based on the number of slots included in the third time-domain resources, for example, obtained by multiplying the number of slots included in the third time-domain resources by a weighting factor. In yet other implementations, $N_{reserved}$ may be obtained based on the number of first time units included in the third time-domain resources, for example, by multiplying the number of first time units included in the third time-domain resources by the number of slots included in the first time unit (i.e., M1). The embodiments of the disclosure do not impose specific limitations on the method for calculating $N_{reserved}$.

It should be noted that the embodiments of the disclosure describe the determination of the number of first time units included in the first set based on the first quantity as an example. The embodiments of the disclosure are equally applicable to cases where the number of first time units included in the first set is determined based on the third quantity.

In some implementations, the first set represents a set of time units within one SFN duration that may belong to the resource pool.

In some implementations, the first set (or the set of time units within one SFN duration that may belong to the resource pool) can be expressed as: ($t_0^{SL}, t_1^{SL}, \cdots, t_{T_{max}-1}^{SL}$), where $0 \le t_i^{SL} < 10240 \times 2^{\mu}/M1$, $0 \le i < T_{max}$.

Here, $t_i^{SL}$ represents the i$^{th}$ first time unit in the first set, and $T_{max}$ may be determined based on the number of remaining time-domain resources after excluding the first time-domain resources, the second time-domain resources, and the third time-domain resources from the time-domain resources included within one SFN duration. For example, $T_{max}$ may equal the number of first time units included within one SFN duration minus the number of first time units corresponding to the first time-domain resources, the number of first time units corresponding to the second time-domain resources, and the number of first time units corresponding to the third time-domain resources.

In some implementations, the first set is obtained by re-indexing the remaining first time units (after excluding the first time units corresponding to the first time-domain resources, the first time units corresponding to the second time-domain resources, and the first time units corresponding to the third time-domain resources from the first time units included within one SFN duration) in ascending order of time unit indices.

The above describes the method for determining the first set in the embodiments of the disclosure. Below, the method for determining the number of first time units included in the third time-domain resources and the method for determining the third time-domain resources are introduced.

In some implementations, the number of first time units included in the third time-domain resources is determined based on one or more of the following: the number of first time units included in the first time-domain resources, the number of first time units included in the second time-domain resources, and the number of bits corresponding to the first information.

In other implementations, the number of first time units included in the third time-domain resources may be determined based on one or more of the following: the number of first time units or the number of slots included within one SFN duration, the number of slots included in the first time unit, the number of first time units included in the first time-domain resources, the number of first time units included in the second time-domain resources, and the number of bits corresponding to the first information.

Taking the case where the first information indicates a bitmap as an example, the number of bits corresponding to the first information can be understood as the number of bits included in the bitmap.

In some implementations, the number of first time units included in the third time-domain resources satisfies: $N_{reserved}$ = (10240 $\times$ 2$^\mu$/M1 - $N_{S\text{-}SSB}$ - $N_{nonSL}$) mod L, where L represents the number of bits corresponding to the first information, and other parameters can be referred to the descriptions above. That is to say, the number of first time units included in the third time-domain resources is set in such a manner that the number of remaining first time units within an SFN duration after subtracting the number of first time units included in the first time-domain resources $N_{S\text{-}SSB}$, the number of first time units included in the second time-domain resources $N_{nonSL}$, and the number of first time units included in the third time-domain resources $N_{reserved}$ can be evenly divided by the number of bits corresponding to the first information.

In some implementations, the third time-domain resources are determined from a second set based on one or more of the following: the number of first time units included in the first time-domain resources, the number of first time units included in the second time-domain resources, and the number of first time units included in the third time-domain resources.

In some implementations, the third time-domain resources are determined from a second set based on one or more of the following: the number of first time units or the number of slots included within one SFN duration, the number of slots included in the first time unit, the number of first time units included in the first time-domain resources, the number of first time units included in the second time-domain resources, and the number of first time units included in the third time-domain resources.

The time units in the second set are time units corresponding to target time-domain resources among the time-domain resources within the SFN duration, where the target time-domain resources are the remaining time-domain resources within the SFN duration after excluding the first time-domain resources and the second time-domain resources.

In some implementations, the remaining time-domain resources within the SFN duration after excluding the first time-domain resources and the second time-domain resources are re-indexed in ascending order of their indices. The second set can be expressed as $l_0, l_1, \cdots, l_{(10240 \times 2^\mu/M1\text{-}N_{S\text{-}SSB}\text{-}N_{nonSL}\text{-}1)}$.

In some implementations, the third time-domain resources include the $r^{th}$ time unit in the second set, where: $r$ is an integer, $0 \le r < 10240 \times 2^\mu/M1$ - $N_{S\text{-}SSB}$ - $N_{nonSL}$, and $r = \left\lfloor \dfrac{m \cdot (10240 \times 2^\mu/M1 - N_{S-SSB} - N_{nonSL})}{N_{reserved}} \right\rfloor$ , where $\lfloor \rfloor$ represents a floor operation, $m = 0, 1, \cdots, N_{reserved}$-1, and other related parameters can be referred to the descriptions above. For brevity, they are not repeated here.

The above describes the method for determining the third time-domain resources in the embodiments of the disclosure. Below, the method for determining the time units belonging to the resource pool from the first set is introduced.

In some implementations, the first information is a bitmap. If the value of the $(k'+1)^{th}$ bit in the bitmap is 1, then the $(k+1)^{th}$ time unit in the first set belongs to the resource pool, where $k'$ represents the index of the bit in the bitmap, $k$ represents the index of the time unit in the first set, $k$ and $k'$ are both integers greater than or equal to 0, $k$ is determined based on $k'$ and $L$, or $k$ and $k'$ have an association relationship, and $L$ represents the length of the bitmap.

It should be noted that in the above description, k' represents the index of bits in the bitmap. In some scenarios, indices of bits may start from 0, meaning the 1st bit in the bitmap corresponds to index 0. Similarly, $k$ represents the index of time units (e.g., first time units) in the first set, in some scenarios, $k$ may also start from 0, meaning the 1st time unit in the first set corresponds to index 0.

Of course, in the embodiments of the disclosure, the index $k'$ of the bitmap and/or the index k of time units in the first set may alternatively start from 1. Accordingly, if the $k'^{th}$ bit in the bitmap has a value of 1, then the $k^{th}$ time unit in the first set belongs to the resource pool, where $k$ and $k'$ are both integers greater than or equal to 0, and $k$ is determined based on $k'$ and $L$, or $k$ and $k'$ have an association relationship. Here, $L$ represents the length of the bitmap.

The embodiments of the disclosure do not limit the method for determining $k$ (i.e., the association relationship between $k$ and $k'$). For example, $k$ may be determined by the formula $k' = k$ mod $L$, where "*mod*" represents the modulo operation.

It should be noted that the value of $k$ is less than the maximum number of first time units included in the first set. For example, the range of $k$ can be expressed as: $0 \le k < 10240 \times 2^\mu/M1$ - $N_{S\text{-}SSB}$ - $N_{nonSL}$ - $N_{reserved}$.

In some implementations, a first time unit $t_k^{SL}$ $(0 \le k < 10240 \times 2^\mu/M1 - N_{S-SSB} - N_{nonSL} - N_{reserved})$ in the first set belongs to the resource pool if the following condition is satisfied: if $b_{k'} = 1$ and $k' = k \bmod L$, then the first time unit $t_k^{SL}$ belongs to the resource pool, where $b_{k'}$ represents the $(k'+1)^{th}$ bit in the bitmap corresponding to the first information.

In some implementations, the set of time units determined to belong to the resource pool from the first set based on the first information is referred to as a third set. The first time units determined to belong to the resource pool as mentioned before are re-indexed in ascending order in the third set, where the first time units in the third set are denoted as $t'^{SL}_i$, with $i$ taking values from $\{0, 1, ..., T'_{max} - 1\}$, and $T'_{max}$ represents the number of first time units included in the third set.

Additionally, it should be noted that the embodiments of the disclosure do not limit the correspondence between bit values and whether time-domain resources belong to the resource pool. In some implementations: a bit value of 1 may indicate that the corresponding time unit belongs to the resource pool, while a bit value of 0 may indicate that the corresponding time unit does not belong to the resource pool. In other implementations, a bit value of 0 may indicate that the corresponding time unit belongs to the resource pool, while a value of 1 may indicate the corresponding time unit does not belong to the resource pool.

As described earlier, in the embodiments of the disclosure, the time units used for S-SSB transmission, the time units used for transmitting PSCCH/PSSCH, and the time units indicated by the first information can all be first time units. Accordingly, to improve slot utilization within the SFN duration, in some implementations: the number of slots included within the SFN duration may be an integer multiple of the number of slots included in the first time unit. in other words, the first terminal device does not expect the number of slots (e.g., $10240 \times 2^\mu$) within the SFN duration to be indivisible by $M1$. In other words, the first terminal device expects the number of slots within the SFN duration to be an integer multiple of the number of slots included in the first time unit. In the embodiments of the disclosure, the number of slots within the SFN duration may not necessarily be an integer multiple of the number of slots included in the first time unit.

## Embodiment 2-2: S-SSB Transmission based on the Second Time Unit

In some scenarios, within an SFN duration, one or more of time-domain resources that cannot be used for sidelink transmission (also referred to as "second time-domain resources"), time-domain resources used for S-SSB transmission (also referred to as "first time-domain resources"), and reserved time-domain resources (also referred to as "third time-domain resources") may not belong to the resource pool. Therefore, when indicating the time-domain resources that belong to the resource pool, the above one or more types of resources need to be considered.

In other words, assuming that the time-domain resources belonging to the resource pool are determined from a first set, where the first set includes multiple first time units, the first set is determined based on one or more of the following: the first time-domain resources, the second time-domain resources, and the third time-domain resources.

In some implementations, if the 1st symbol that can be used for sidelink transmission in a slot is the 1st symbol of the slot, then the number of slots within the SFN duration that cannot be used for sidelink transmission is 0, that is, $N_{nonSL} = 0$.

It should be noted that the above-mentioned reserved time-domain resources may be, for example, reserved time units or reserved slots. In the embodiments of the disclosure, the reserved time-domain resources may also include reserved time domain symbols. The disclosure does not limit this.

For ease of introduction, the following description uses "$N_{S-SSB}$" to denote the number (quantity) of time-domain resources included in the first time-domain resources, "$N_{nonST}$" to denote the number of time-domain resources included in the second time-domain resources, and "$N_{reserved}$" to denote the number of time-domain resources included in the third time-domain resources. It should be noted that in the embodiments of the disclosure, the granularity of the time-domain resources included in the above three types of time-domain resources may be the same or different. In addition, $N_{nonSL}$, $N_{S-SSB}$, and $N_{reserved}$ may be integers greater than or equal to 0.

For example, the time-domain resources included in the first time-domain resources may at the granularity of slots. In this case, $N_{S-SSB}$ indicates the number of slots included in the first time-domain resources. Alternatively, the time-domain resources included in the first time-domain resources may at the granularity of the second time unit. In this case, $N_{S-SSB}$ indicates the number of second time units included in the first time-domain resources. Alternatively, the time-domain resources included in the first time-domain resources may at the granularity of the first time unit. In this case, $N_{S-SSB}$ indicates the number of first time units included in the first time-domain resources.

For another example, the time-domain resources included in the second time-domain resources may at the granularity of slots. In this case, $N_{nonSL}$ indicates the number of slots included in the second time-domain resources. Alternatively, the time-domain resources included in the second time-domain resources may at the granularity of the second time unit. In this case, $N_{nonSL}$ indicates the number of second time units included in the second time-domain resources. Alternatively, the time-domain resources included in the second time-domain resources may at the granularity of the first time unit. In this case, $N_{nonSL}$ indicates the number of first time units included in the second time-domain resources.

For yet another example, the time-domain resources included in the third time-domain resources may at the granularity of slots. In this case, $N_{reserved}$ indicates the number of slots included in the third time-domain resources. Alternatively, the time-domain resources included in the third time-domain resources may at the granularity of the second time unit. In this case, $N_{reserved}$ indicates the number of second time units included in the third time-domain resources. Alternatively, the time-domain resources included in the third time-domain resources may at the granularity of the first time unit. In this case, $N_{reserved}$ indicates the number of first time units included in the third time-domain resources.

As introduced above, one or more of the first time-domain resources, the second time-domain resources, and the third time-domain resources do not belong to the resource pool. Therefore, when determining the first set, the above one or more types of time-domain resources can be excluded from the time-domain resources included within an SFN duration.

In some embodiments, the number of first time units or slots included in the first set can be determined based on one or more of the following information: the number of slots included within an SFN duration, the number of slots included in the first time unit, the number of time-domain resources included in the first time-domain resources, the number of time-domain resources included in the second time-domain resources, or the number of time-domain resources included in the third time-domain resources. For example, the number of first time units or slots included in the first set can be determined based on one or more of the following information: the number of slots included within an SFN duration, the number of slots included in the first time unit, the number of slots included in the first time-domain resources, the number of slots included in the second time-domain resources, or the number of slots included in the third time-domain resources.

In some further embodiments, the number of first time units or slots included in the first set can be determined based on one or more of the following information: the number of first time units included within an SFN duration, the number of slots included in the first time unit, the number of second time units included in the first time-domain resources, the number of slots included in a second time unit, the number of time-domain resources included in the second time-domain resources, and the number of time-domain resources included in the third time-domain resources. For example, the number of first time units or slots included in the first set can be determined based on one or more of the following information: the number of first time units included within an SFN duration, the number of slots included in the first time unit, the number of second time units included in the first time-domain resources, the number of slots included in the second time unit, the number of slots included in the second time-domain resources, and the number of slots included in the third time-domain resources.

In some embodiments, the number of first time units corresponding to the time-domain resources included within an SFN duration is $10240 \times 2^{\mu}/M1$, with an index range of $[0, 10240 \times 2^{\mu}/M1 - 1]$. If $N_{S\text{-}SSB}$ represents the number of slots corresponding to the first time-domain resources, $N_{nonSL}$ represents the number of slots corresponding to the second time-domain resources, and $N_{reserved}$ represents the number of first time units corresponding to the third time-domain resources, then the number of first time units included in the first set is $(10240 \times 2^{\mu} - N_{S\text{-}SSB} - N_{nonSL}) /M1 - N_{reserved}$.

In some embodiments, the number of first time units corresponding to the time-domain resources included within an SFN duration is $10240 \times 2^{\mu}/M1$, with an index range of $[0, 10240 \times 2^{\mu}/M1 - 1]$. If $N_{S\text{-}SSB}$ represents the number of slots corresponding to the first time-domain resources, $N_{nonSL}$ represents the number of first time units corresponding to the second time-domain resources, and $N_{reserved}$ represents the number of first time units corresponding to the third time-domain resources, then the number of first time units included in the first set is $(10240 \times 2^{\mu} - N_{S\text{-}SSB}) /M1 - N_{nonSL} - N_{reserved}$.

In some embodiments, the number of first time units corresponding to the time-domain resources included within an SFN duration is $10240 \times 2^{\mu}/M1$, with an index range of $[0, 10240 \times 2^{\mu}/M1 - 1]$. If $N_{S\text{-}SSB}$ represents the number of slots corresponding to the first time-domain resources, $N_{nonSL}$ represents the number of slots corresponding to the second time-domain resources, and $N_{reserved}$ represents the number of slots corresponding to the third time-domain resources, then the number of first time units included in the first set is $(10240 \times 2^{\mu} - N_{S\text{-}SSB} - N_{nonSL} - N_{reserved}) /M1$.

In some embodiments, the number of first time units included in the first set can be determined based on a second quantity, where the second quantity is equal to $(10240 \times 2^{\mu} - N_{S\text{-}SSB} - N_{nonSL})/M1 - N_{reserved}$.

In some embodiments, the number of first time units included in the first set can be determined based on a fourth quantity, where the fourth quantity is equal to $(10240 \times 2^{\mu} - N_{S\text{-}SSB}) /M1 - N_{nonSL} - N_{reserved}$.

In some embodiments, the number of first time units included in the first set can be determined based on a fifth quantity, where the fifth quantity is equal to $(10240 \times 2^{\mu} - N_{S\text{-}SSB} - N_{nonSL} - N_{reserved})/M1$.

The aforementioned $\mu$ represents a parameter determined based on the sidelink subcarrier spacing (the value of $\mu$ may, for example, refer to the relevant introduction in Table 5).

The aforementioned $N_{S\text{-}SSB}$ represents a parameter determined based on the number of second time units included in the first time-domain resources. In some embodiments, $N_{S\text{-}SSB}$ can be equal to the number of slots included in the first time-domain resources. In some embodiments, the number of slots included in the first time-domain resources can be determined based on the number of second time units included in the first time-domain resources, for example, $N_{S\text{-}SSB}$ can be equal to the product of the number of second time units included in the first time-domain resources and the number of slots included in a second time unit (i.e., $M2$). The disclosure does not specifically limit the manner of calculating $N_{S\text{-}SSB}$.

The aforementioned $N_{nonSL}$ represents a parameter determined based on the number of time-domain resources included in the second time-domain resources, for example, the time-domain resources are slots, $N_{nonSL}$ represents a parameter determined based on the number of slots included in the second time-domain resources. In some embodiments, $N_{nonSL}$ can be equal to the number of slots included in the second time-domain resources. In some embodiments, $N_{nonSL}$ can be equal to the number of first time units included in the second time-domain resources. In the embodiments of the disclosure, $N_{nonSL}$ can also be obtained based on the number of time-domain resources included in the second time-domain resources, for example, $N_{nonSL}$ can be obtained by multiplying the number of first time units included in the second time-domain resources by the number of slots included in a first time unit (i.e., $M1$). Alternatively, $N_{nonSL}$ can be obtained by multiplying the number of second time units included in the second time-domain resources by the number of slots included in the second time unit (i.e., $M2$). The disclosure does not specifically limit the manner of calculating $N_{nonSL}$.

The aforementioned $N_{reserved}$ represents a parameter determined based on the number of time-domain resources included in the third time-domain resources. For example, the time-domain resources are the first time unit, $N_{reserved}$ represents a parameter determined based on the number of first time units included in the third time-domain resources. In some embodiments, $N_{reserved}$ can be equal to the number of first time units included in the third time-domain resources. In some embodiments, $N_{reserved}$ can be equal to the number of slots included in the third time-domain resources. In the embodiments of the disclosure, $N_{reserved}$ can also be obtained based on the number of time-domain resources included in the third time-domain resources, for example, $N_{reserved}$ can be obtained by dividing the number of slots included in the third time-domain resources by the number of slots included in a first time unit (i.e., $M1$). The embodiments of the disclosure do not specifically limit the manner of calculating $N_{reserved}$.

In some embodiments, the number of slots corresponding to the time-domain resources included within an SFN duration is $10240 \times 2^\mu$, with an index range of $[0, 10240 \times 2^\mu - 1]$. If $N_{S\text{-}SSB}$ represents the number of slots corresponding to the first time-domain resources, $N_{nonSL}$ represents the number of slots corresponding to the second time-domain resources, and $N_{reserved}$ represents the number of slots corresponding to the third time-domain resources, then the number of slots included in the first set is $10240 \times 2^\mu - N_{S\text{-}SSB} - N_{nonSL} - N_{reserved}$, and the number of first time units included in the first set is $(10240 \times 2^\mu - N_{S\text{-}SSB} - N_{nonSL} - N_{reserved})/M1$.

In some embodiments, the number of slots corresponding to the time-domain resources included within an SFN duration is $10240 \times 2^\mu$, with an index range of $[0, 10240 \times 2^\mu - 1]$. If $N_{S\text{-}SSB}$ represents the number of slots corresponding to the first time-domain resources, $N_{nonSL}$ represents the number of first time units corresponding to the second time-domain resources, and $N_{reserved}$ represents the number of first time units corresponding to the third time-domain resources, then the number of first time units included in the first set is $(10240 \times 2^\mu - N_{S\text{-}SSB})/M1 - N_{nonSL} - N_{reserved}$.

In some embodiments, the number of slots corresponding to the time-domain resources included within an SFN duration is $10240 \times 2^\mu$, with an index range of $[0, 10240 \times 2^\mu - 1]$. If $N_{S\text{-}SSB}$ represents the number of slots corresponding to the first time-domain resources, $N_{nonSL}$ represents the number of slots corresponding to the second time-domain resources, and $N_{reserved}$ represents the number of first time units corresponding to the third time-domain resources, then the number of first time units included in the first set is $(10240 \times 2^\mu - N_{S\text{-}SSB} - N_{nonSL})/M1 - N_{reserved}$. It should be noted that the scheme of the embodiments of the disclosure is illustrated with an example in which the number of first time units included in the first set is determined based on the second quantity, but the scheme of the embodiments of the disclosure is also applicable to the case where the number of first time units included in the first set is determined based on the fourth quantity or the fifth quantity.

In some embodiments, the first set represents a set of time units that may belong to the resource pool within an SFN duration.

In some embodiments, the first set (or, the set of time units that may belong to the resource pool within an SFN duration) can be represented as: ( $t_0^{SL}, t_1^{SL}, \cdots, t_{T_{max}-1}^{SL}$ ), where $0 \leq t_i^{SL} < 10240 \times 2^\mu/M1, 0 \leq i < T_{max}, t_i^{SL}$ represents the $i^{th}$ first time unit in the first set, and $T_{max}$ can be determined based on the number of remaining time-domain resources after excluding the first time-domain resources, the second time-domain resources, and the third time-domain resources from the time-domain resources included within an SFN duration. For example, $T_{max}$ can be obtained by: subtracting the number of slots corresponding to the first time-domain resources and the number of slots corresponding to the second time-domain resources from the number of slots included within an SFN duration, to obtain the number of first time units corresponding to remaining slots, and then further subtracting the number of first time units corresponding to the third time-domain resources from the number of first time units corresponding to remaining slots.

In some embodiments, the slots remaining after excluding the second time units (or slots) corresponding to the first time-domain resources and the time-domain resources corresponding to the second time-domain resources from the slots included within an SFN duration are divided according to the first time units; after that, the first time units corresponding to the third time-domain resources are subtracted to obtain the remaining first time units; then, the remaining first time units are re-indexed in ascending order of the indices of the first time units to obtain the aforementioned first set.

The above text has introduced the method for determining the first set in the embodiments of the disclosure. The following text introduces the method for determining the number of first time units included in the third time-domain resources and the method for determining the third time-domain resources in the embodiments of the disclosure.

In some embodiments, the number of time-domain resources included in the third time-domain resources is determined based on one or more of the following: the number of time-domain resources included in the first time-domain resources; the number of time-domain resources included in the second time-domain resources; and the number of bits corresponding to the first information. For example, the number of time-domain resources included in the third time-domain resources is determined based on one or more of the following: the number of slots included in the first time-domain resources; the number of slots included in the second time-domain resources; and the number of bits corresponding to the first information. In some other embodiments, the number of time-domain resources included in the third time-domain resources is determined based on one or more of the following: the number of first time units or slots included within an SFN duration, the number of slots included in a first time unit, the number of time-domain resources included in the first time-domain resources; the number of time-domain resources included in the second time-domain resources; and the number of bits corresponding to the first information. For example, the number of time-domain resources included in the third time-domain resources is determined based on one or more of the following: the number of first time units or slots included within an SFN duration, the number of slots included in the first time unit, the number of slots included in the first time-domain resources; the number of slots included in the second time-domain resources; and the number of bits corresponding to the first information.

As introduced above, in the embodiments of the disclosure, the S-SSB can be transmitted based on the second time unit. Accordingly, the number of time-domain resources included in the first time-domain resources may be, for example, the number of second time units included in the first time-domain resources. Of course, in the embodiments of the disclosure, the number of time-domain resources included in the first time-domain resources may also be for example, the number of slots included in the first time-domain resources.

In some embodiments, the number of time-domain resources included in the second time-domain resources may be the number of slots included in the second time-domain resources. Alternatively, the number of time-domain resources included in the second time-domain resources may also be the number of first time units included in the second time-domain resources. Alternatively, the number of time-domain resources included in the second time-domain resources may also be the number of second time units included in the second time-domain resources. The embodiments of the disclosure do not limit this.

Taking the first information being used to indicate a bitmap as an example, the number of bits corresponding to the first information can be understood as the number of bits included in the bitmap.

In some implementations, the number of time-domain resources included in the third time-domain resources satisfies: $N_{reserved} = (10240 \times 2^{\mu} - N_{S\text{-}SSB} - N_{nonSL})/M1 \bmod L$, where $L$ represents the number of bits corresponding to the first information, and the other parameters can be referred to the introduction above. That is to say, the number of time-domain resources included in the third time-domain resources is set in such a way that the number of first time units corresponding to remaining time-domain resources within an SFN duration, which is obtained after subtracting from the number of time-domain resources from the SFN duration, the number of time-domain resources $N_{S\text{-}SSB}$ included in the first time-domain resources, the number of time-domain resources $N_{nonSL}$ included in the second time-domain resources, and the number of time-domain resources $N_{reserved}$ included in the third time-domain resources, is divisible by the number of bits corresponding to the first information.

In some embodiments, the third time-domain resources are determined from a second set based on one or more of the following: the number of time-domain resources included in the first time-domain resources; the number of time-domain resources included in the second time-domain resources; and the number of time-domain resources included in the third time-domain resources. For example, the third time-domain resources are determined from a second set based on one or more of the following: the number of slots included in the first time-domain resources; the number of slots included in the second time-domain resources; and the number of slots included in the third time-domain resources.

In some embodiments, the third time-domain resources are determined from a second set based on one or more of the following: the number of first time units or slots included within an SFN duration, the number of slots included in the first time unit, the number of time-domain resources included in the first time-domain resources; the number of time-domain resources included in the second time-domain resources; and the number of time-domain resources included in the third time-domain resources. For example, the third time-domain resources are determined from a second set based on one or more of the following: the number of first time units or slots included within an SFN duration, the number of slots included in the first time unit, the number of slots included in the first time-domain resources; the number of slots included in the second time-domain resources; and the number of slots included in the third time-domain resources.

The time units in the aforementioned second set are time units correspond to target time-domain resources among time-frequency domain resources within the SFN duration, where the target time-domain resources are the remaining time-domain resources within the SFN duration after excluding the first time-domain resources and the second time-domain resources. In some embodiments, the second set can be represented as $(l_0, l_1, \cdots, l_{(10240 \times 2_{\mu} - N_{S\text{-}SSB} - N_{nonSL})/M1 -}$

1)).

In some embodiments, the third time-domain resource is the $r^{th}$ time unit in the second set, where r is an integer, 0 $\leq$ r < (10240 $\times$ 2$^\mu$ - $N_{S\text{-}SSB}$ - $N_{nonSL}$)/M1, and $r = \left\lfloor \dfrac{m \cdot (10240 \times 2^\mu - N_{S\text{-}SSB} - N_{nonSL})/M1}{N_{reserved}} \right\rfloor$ , where $\lfloor \rfloor$ represents the floor function (i.e., rounding down to the nearest integer), $m = 0, 1, \cdots, N_{reserved}$ - 1. Other related parameters can be referred to in the introduction above, and for the sake of brevity, they are not repeated here.

The above text has introduced the method for determining the third time-domain resources in the embodiments of the disclosure. The following text introduces the method for indicating the time units belonging to the resource pool from the first set in the embodiments of the disclosure.

In some implementations, the first information is a bitmap. If the value of the $(k'+1)^{th}$ bit in the bitmap is 1, then the $(k+1)^{th}$ time unit in the first set belongs to the resource pool. Here, $k'$ indicates the index of a bit in the bitmap, $k$ indicates the index of a time unit in the first set, both $k$ and $k'$ are integers greater than or equal to 0, and $k$ is determined based on $k'$ and $L$, or $k$ and $k'$ have an association relationship. $L$ represents the length of the bitmap.

It should be noted that $k'$ indicates the index of a bit in the bitmap. In some scenarios, the index of the bit may start from 0, and accordingly, the index corresponding to the 1$^{st}$ bit in the bitmap can be 0. Additionally, $k$ indicates the index of a time unit in the first set (e.g., the first time unit). In some scenarios, the index of the time unit may start from 0, and accordingly, the index corresponding to the 1$^{st}$ time unit in the first set can be 0.

Of course, in the embodiments of the disclosure, the index $k'$ of the bitmap and/or the index $k$ of the time unit in the first set may also start from 1. Accordingly, if the value of the $k'^{th}$ bit in the bitmap is 1, then the $k^{th}$ time unit in the first set belongs to the resource pool. Here, both $k$ and $k'$ are integers greater than or equal to 0, and $k$ is determined based on $k'$ and $L$, or $k$ and $k'$ have an association relationship. $L$ represents the length of the bitmap.

The disclosure does not limit the method for determining $k$ (or the association between $k$ and $k'$). For example, $k$ can be determined by the formula $k' = k \bmod L$, where "mod" represents the modulo operation.

It should be noted that the value of $k$ is less than the maximum number of first time units included in the first set. For example, the range of $k$ can be expressed as: 0 $\leq k <$ (10240 $\times$ 2$^\mu$ - $N_{S\text{-}SSB}$ - $N_{nonSL}$) /M1 - $N_{reserved}$.

In some implementations, the first time unit $t_k^{SL} (0 \leq k < (10240 \times 2^\mu - N_{S\text{-}SSB} - N_{nonSL})/M1 - N_{reserved})$ in the first set belongs to the resource pool if the following condition is satisfied: if $b_{k'}$ = 1, $k' = k \bmod L$, then the first time unit $t_k^{SL}$ belongs to the resource pool. Here, $b_{k'}$ represents the $(k'+1)^{th}$ bit in the bitmap corresponding to the first information.

In some embodiments, the set of time units determined from the first set to belong to the resource pool based on the first information is referred to as the third set. The first time units thus determined to belong to the resource pool are re-indexed in the third set in ascending order of their original indices. The first time units in the third set are represented as $t'^{SL}_i$, where $i$ takes values in {0, 1, ..., $T'_{max}$ - 1}, and $T'_{max}$ indicates the number of first time units included in the third set.

In some scenarios, the time-domain resources between two adjacent second time units for S-SSB transmission within an SFN duration can be indicated by the first information to belong to the resource pool or not. As introduced earlier, the first information indicates resources at the granularity of the first time unit. Therefore, to align with the indication manner of the first information, in some embodiments, the number of slots between two adjacent second time units for S-SSB transmission within an SFN duration is an integer multiple of the number of slots included in the first time unit. That is, the first terminal device expects the number of slots between two adjacent second time units for S-SSB transmission within an SFN duration to be an integer multiple of the number of slots included in the first time unit, or conversely, the first terminal device does not expect it to be otherwise, that is, does not expect that the number of slots between two adjacent second time units for S-SSB transmission within an SFN duration is not an integer multiple of the number of slots included in the first time unit.

In some embodiments, the difference between the number of slots between two adjacent second time units for S-SSB transmission within an SFN duration and a target quantity is an integer multiple of the number of slots included in the first time unit. The target quantity is the number of time-domain resources of the second time-domain resources between the two adjacent second time units for S-SSB transmission. In other words, the number of remaining slots between the two adjacent second time units for S-SSB transmission within an SFN duration excluding the second time-domain resources, is an integer multiple of the number of slots included in the first time unit. This helps align with the resource indication granularity of the first information. In other words, the first terminal device expects the difference to be an integer multiple of the number of slots included in the first time unit, or conversely, the first terminal device does not expect it to be otherwise, that is, does not expect that the difference is not an integer multiple of the number of slots included in the first time unit.

In some embodiments, after subtracting the number of slots included in the first time-domain resources and the number of slots included the second time-domain resources from the total number of slots within an SFN duration, the number of remaining slots is an integer multiple of the number of slots included in the first time unit. This helps reduce the number of reserved time-domain resources. That is to say, the first terminal device expects the number of remaining slots to be an integer multiple of the number of slots included in the first time unit, or conversely, the first terminal device does not expect it to be otherwise, that is, does not expect the number of remaining slots is not an integer multiple of the number of slots included in the first time unit.

As described in the schemes of Embodiments 2.1 and 2.2 above, the remaining time-domain resources within an SFN duration, excluding the first time-domain resources, the second time-domain resources, and the third time-domain resources, may belong to the resource pool. Therefore, to facilitate indicating whether the remaining time-domain resources belong to the resource pool at the granularity of the first time unit, in some embodiments, the number of remaining slots within the SFN duration, excluding the first, second, and third time-domain resources, is an integer multiple of the number of slots included in the first time unit. In other words, the first terminal device expects the number of remaining slots within the SFN duration excluding the first, second, and third time-domain resources to be an integer multiple of the number of slots included in the first time unit, or conversely, the first terminal device does not expect it to be otherwise, that is, does not expect the number of remaining slots within the SFN duration excluding the first, second, and third time-domain resources is not an integer multiple of the number of slots included in the first time unit.

In some embodiments, after subtracting the number of slots in the first time-domain resources, the number of slots in the second time-domain resources, and the number of slots included in the third time-domain resources from the total number of slots within an SFN duration, the number of remaining slots is an integer multiple of the number of bits corresponding to the first information. This helps align with the indication manner of the first information. In other words, the first terminal device expects the number of remaining slots to be an integer multiple of the number of bits corresponding to the first information, or conversely, the first terminal device does not expect it to be otherwise, that is, does not expect the number of remaining slots is not an integer multiple of the number of bits corresponding to the first information.

As described above in conjunction with FIG. 1 to FIG. 14, the method embodiments of the disclosure have been detailed. Below, in conjunction with FIG. 15 and FIG. 16, the device embodiments of the disclosure will be described in detail. It should be understood that the descriptions of the method embodiments correspond to those of the device embodiments. Therefore, parts not detailed here can be referred to in the preceding method embodiments.

FIG. 15 is a schematic diagram of the terminal device according to embodiments of the disclosure. The terminal device illustrated in FIG. 15 can be the first terminal device described above. The terminal device 1500 in FIG. 15 can include a processing unit 1510.

The processing unit 1510 is configured to determine first information, where the first information is used to indicate a time-domain resource belonging to a resource pool within one SFN duration. The resource pool is used for PSCCH and/or PSSCH transmission based on a first time unit, the first time unit includes $M1$ consecutive slots, and $M1$ is a positive integer greater than 1.

In some implementations, the sidelink transmission includes an S-SSB transmission, and the S-SSB transmission includes S-SSB transmission based on the first time unit or S-SSB transmission based on a second time unit, where the second time unit includes $M2$ consecutive slots, and $M2$ is an integer greater than or equal to 1.

In some implementations, if the S-SSB transmission includes the S-SSB transmission based on the first time unit, the time-domain resource belonging to the resource pool is determined from a first set, and the first set is determined based on one or more of the following: a first time-domain resource, determined based on a time-domain resource for S-SSB transmission within the SFN duration; a second time-domain resource, determined based on a time-domain resource unavailable for sidelink transmission within the SFN duration; a third time-domain resource, determined based on a reserved time-domain resource within the SFN duration; the first set includes multiple first time units.

In some implementations, where the number of first time units includes in the first set is determined based on a first quantity, where the first quantity is equal to $10240 \times 2^{\mu}/M1 - N_{S\text{-}SSB} - N_{nonSL} - N_{reserved}$, $N_{S\text{-}SSB}$ represents a parameter determined based on the number of first time units included in the first time-domain resource, $N_{nonSL}$ represents a parameter determined based on the number of first time units included in the second time-domain resource, $N_{reserved}$ represents a parameter determined based on the number of first time units included in the third time-domain resource, and $\mu$ represents a parameter determined based on a sidelink subcarrier spacing.

In some implementations, the number of first time units included in the third time-domain resource is determined based on one or more of the following: the number of first time units included in the first time-domain resource; the number of first time units included in the second time-domain resource; the number of bits corresponding to the first information.

In some implementations, the number of first time units included in the third time-domain resource satisfies: $N_{reserved} = (10240 \times 2^{\mu}/M1 - N_{S\text{-}SSB} - N_{nonSL}) \bmod L$, where $N_{S\text{-}SSB}$ represents a parameter determined based on the number of first time units included in the first time-domain resource, $N_{nonSL}$ represents a parameter determined based on the number of first time units included in the second time-domain resource, $N_{reserved}$ represents the number of first time units included in the third time-domain resource, $L$ represents the number of bits corresponding to the first information, and $\mu$ represents a parameter determined based on a sidelink subcarrier spacing.

In some implementations, the third time-domain resource is determined from a second set based on one or more

24

of the following: the number of first time units included in the first time-domain resource; the number of first time units included in the second time-domain resource; the number of first time units included in the third time-domain resource; where time units in the second set are time units corresponding to target time-domain resources among time-domain resources within the SFN duration, and the target time-domain resources are remaining time-domain resources within the SFN duration excluding the first time-domain resource and the second time-domain resource.

In some implementations, the third time-domain resource includes the $r^{th}$ time unit in the second set, where r is an integer, $0 \leq r < 10240 \times 2^{\mu}/M1 - N_{S-SSB} - N_{nonSL}$, and $r = \left\lfloor \dfrac{m \cdot (10240 \times 2^{\mu}/M1 - N_{S-SSB} - N_{nonSL})}{N_{reserved}} \right\rfloor$, $\lfloor \rfloor$ represents a floor operation, $m = 0, 1, \cdots, N_{reserved} - 1$, $N_{S-SSB}$ represents a parameter determined based on the number of first time units included in the first time-domain resource, $N_{nonSL}$ represents a parameter determined based on the number of first time units included in the second time-domain resource, $N_{reserved}$ represents a parameter determined based on the number of first time units included in the third time-domain resource, and $\mu$ represents a parameter determined based on a sidelink subcarrier spacing.

In some implementations, the number of slots within the SFN duration is an integer multiple of the number of slots included in the first time unit.

In some implementations, if the S-SSB transmission includes the S-SSB transmission based on the second time unit, the time-domain resource indicated by the first information is determined from a first set, and the first set is determined based on one or more of the following: a first time-domain resource determined based on a time-domain resource for S-SSB transmission within the SFN duration; a second time-domain resource determined based on a time-domain resource unavailable for sidelink transmission within the SFN duration; or a third time-domain resource determined based on a reserved time-domain resource within the SFN duration; where the first set includes mutiple first time units.

In some implementations, the number of first time units included in the first set is determined based on a second quantity, where the second quantity is equal to $(10240 \times 2^{\mu} - N_{S-SSB} - N_{nonSL})/M1 - N_{reserved}$, $N_{S-SSB}$ represents a parameter determined based on the number of second time units included in the first time-domain resource, $N_{nonSL}$ represents a parameter determined based on the number of time-domain resources included in the second time-domain resource, $N_{reserved}$ represents a parameter determined based on the number of time-domain resources included in the third time-domain resource, and $\mu$ represents a parameter determined based on a sidelink subcarrier spacing.

In some implementations, the number of time-domain resources included in the third time-domain resource is determined based on one or more of the following: the number of time-domain resources included in the first time-domain resource; the number of time-domain resources included in the second time-domain resource; and the number of bits corresponding to the first information.

In some implementations, the number of time-domain resources included in the third time-domain resource satisfies: $N_{reserved} = (10240 \times 2^{\mu} - N_{S-SSB} - N_{nonSL})/M1 \bmod L$, where $N_{S-SSB}$ represents a parameter determined based on the number of time-domain resources included in the first time-domain resource, $N_{nonSL}$ represents a parameter determined based on the number of time-domain resources included in the second time-domain resource, $N_{reserved}$ represents the number of time-domain resources included in the third time-domain resource, L represents the number of bits corresponding to the first information, and $\mu$ represents a parameter determined based on a sidelink subcarrier spacing.

In some implementations, the third time-domain resource is determined from a second set based on one or more of the following: the number of time-domain resources included in the first time-domain resource; the number of time-domain resources included in the second time-domain resource; and the number of time-domain resources included in the third time-domain resource; where time units in the second set are time units corresponding target time-domain resources among time-domain resources within the SFN duration, and the target time-domain resources are time-domain resources within the SFN duration other than the first time-domain resource and the second time-domain resource.

In some implementations, where the third time-domain resource is the $r^{th}$ time unit in the second set, where r is an integer, $0 \leq r < (10240 \times 2^{\mu} - N_{S-SSB} - N_{nonSL})/M1$, and $r = \left\lfloor \dfrac{m \cdot (10240 \times 2^{\mu} - N_{S-SSB} - N_{nonSL})/M1}{N_{reserved}} \right\rfloor$, $\lfloor \rfloor$ represents a floor operation, $m = 0, 1, \cdots, N_{reserved} - 1$, $N_{S-SSB}$ represents a parameter determined based on the number of time-domain resources included in the first time-domain resource, $N_{nonSL}$ represents a parameter determined based on the number of time-domain resources included in the second time-domain resource, $N_{reserved}$ represents a parameter determined based on the number of time-domain resources included in the third time-domain resource, and $\mu$ represents a parameter determined based on a sidelink subcarrier spacing.

In some implementations, the number of slots between two adjacent second time units for S-SSB transmission within the SFN duration is an integer multiple of the number of slots included in the first time unit.

In some implementations, the number of remaining slots after subtracting the number of slots in the first time-domain resource and the number of slots in the second time-domain resource from the total number of slots within the SFN duration is an integer multiple of the number of slots included in the first time unit.

In some implementations, the number of remaining slots after subtracting the number of slots in the first time-domain resource, the number of slots in the second time-domain resource, and the number of slots included in the third time-domain resource from the total number of slots within the SFN duration is an integer multiple of the number of slots included in the first time unit.

In some implementations, the number of remaining slots after subtracting the number of slots in the first time-domain resource, the number of slots in the second time-domain resource, and the number of slots included in the third time-domain resource from the total number of slots within the SFN duration is an integer multiple of the number of bits corresponding to the first information.

In some implementations, where the first information is a bitmap, and in response to the value of the $(k'+1)^{th}$ bit in the bitmap being 1, the $(k+1)^{th}$ time unit in the first set belongs to the resource pool, where $k'$ represents an index of a bit in the bitmap, $k$ represents an index of a time unit in the first set, $k$ and $k'$ are both integers greater than or equal to 0, and $k$ is determined based on $k'$ and $L$, where $L$ represents the length of the bitmap.

In some implementations, where $k'=k \bmod L$, where $mod$ represents a modulo operation.

In some implementations, if the $1^{st}$ symbol available for sidelink transmission in a slot being the $1^{st}$ symbol of the slot, the number of slots within the SFN duration that is unavailable for sidelink transmission is 0.

In optional embodiments, the processing unit 1510 can be a processor 1610. The terminal device 1500 may further include a transceiver 1630 and a memory 1620, as illustrated in FIG. 16.

FIG. 16 is a schematic structural diagram of a communication device according to an embodiment of the present application. The dashed lines in FIG. 16 indicate that the unit or module is optional. The device 1600 can be configured to implement the method described in the above method embodiments. The device 1600 can be a chip, a terminal device, or a network device.

The device 1600 can include one or more processors 1610. The processor 1610 can support the device 1600 to implement the methods described in the above method embodiments. The processor 1610 can be a general-purpose processor or a dedicated processor. For example, the processor can be a central processing unit (CPU). Alternatively, the processor can also be other general-purpose processors, digital signal processors (DSP), application specific integrated circuits (ASIC), field programmable gate arrays (FPGA), or other programmable logic devices, discrete gates or transistor logic devices, discrete hardware components, etc. The general-purpose processor can be a microprocessor or any other conventional processor.

The device 1600 can further include one or more memories 1620. The memory 1620 stores a program that can be executed by the processor 1610 to cause the processor 1610 to implement the methods described in the above method embodiments. The memory 1620 can be independent of the processor 1610 or integrated into the processor 1610.

The device 1600 can further include a transceiver 1630. The processor 1610 can communicate with other devices or chips through the transceiver 1630. For example, the processor 1610 can transmit and receive data with other devices or chips through the transceiver 1630.

This disclosure also provides a computer-readable storage medium for storing a program. The computer-readable storage medium can be applied to the terminal or network device provided in the present application, and the program causes the computer to execute the methods performed by the terminal or network device in various embodiments of the present application.

This disclosure also provides a computer program product. The computer program product includes a program. The computer program product can be applied to the terminal or network device provided in the present application, and the program causes the computer to execute the methods performed by the terminal or network device in various embodiments of the present application.

This disclosure also provides a computer program. The computer program can be applied to the terminal or network device provided in the present application, and the computer program causes the computer to execute the methods performed by the terminal or network device in various embodiments of the present application.

It should be understood that the terms "system" and "network" in the disclosure can be used interchangeably. Additionally, the terms used in the disclosure are merely for explaining the specific embodiments of the present application and are not intended to limit the present application. The terms "first," "second," "third," and "fourth" used in the description, claims, and drawings of the present application are used to distinguish different objects, not to describe a specific order. Furthermore, the terms "comprise" and "have" and their any variations are intended to cover non-exclusive inclusions. For example, the presence of a stated feature, step, or component does not preclude the presence or addition of one or more other features, steps, or components.

In the embodiments of the present application, the term "indicate" can refer to direct indication, indirect indication, or representation of an associative relationship. For example, A indicates B, which can mean that A directly indicates B, such as B being obtained through A; it can also mean that A indirectly indicates B, such as B being obtained through C when A indicates C; or it can represent an associative relationship between A and B.

In the embodiments of the present application, the term "comprise" can refer to direct inclusion or indirect inclusion. Optionally, the term "comprise" mentioned in the embodiments of the present application can be replaced by "indicate" or "used to determine." For example, A comprises B can be replaced by A indicates B or A is used to determine B.

In the embodiments of the present application, "B corresponding to A" indicates that B is associated with A, and B can be determined based on A. However, it should also be understood that determining B based on A does not mean that B is determined solely based on A; B can also be determined based on A and/or other information.

In the embodiments of the present application, the term "correspond" can indicate a direct or indirect correspondence between two entities, an associative relationship, or a relationship of indication and being indicated, configuration and being configured, etc.

In the embodiments of the present application, "predefined" or "preconfigured" can be implemented by storing corresponding codes, tables, or other means for indicating relevant information in a device (such as a terminal device and a network device). The present application does not limit the specific implementation method. For example, predefined can refer to what is defined in a protocol.

In the embodiments of the present application, the term "protocol" can refer to a standard protocol in the field of communication, such as LTE protocol, NR protocol, and related protocols applicable to future communication systems. The present application does not limit this.

In the embodiments of the present application, the term "and/or" is merely a description of the relationship between associated objects, indicating that three relationships can exist. For example, A and/or B can mean: A exists alone, A and B exist simultaneously, or B exists alone. Additionally, the character "/" in this document generally indicates an "or" relationship between the associated objects.

In the various embodiments of the present application, the sequence numbers of the processes described above do not imply the order of execution, which should be determined based on their functions and inherent logic, and should not limit the implementation process of the embodiments of the present application.

In the several embodiments provided by the present application, it should be understood that the systems, devices, and methods disclosed can be implemented in other ways. For example, the device embodiments described above are merely illustrative. The division of the units mentioned above is only a logical functional division, and there may be other division methods in actual implementation. For example, multiple units or components can be combined or integrated into another system, or some features can be ignored or not executed. Another point is that the coupling or direct coupling or communication connection displayed or discussed between each other can be through some interfaces, devices or units, and can be an electrical, mechanical or other form of indirect coupling or communication connection.

The units described as separate components may or may not be physically separate, and the components displayed as units may or may not be physical units. They can be located in one place, or they can be distributed across multiple network units. Depending on actual needs, some or all units can be selected to achieve the objectives of the present embodiment.

Furthermore, in the embodiments of the present application, the functional units can be integrated into one processing unit, or each unit can exist separately, or two or more units can be integrated into one unit.

In the above embodiments, the implementations can be achieved entirely or partially through software, hardware, firmware, or any combination thereof. When implemented in software, it can be entirely or partially realized in the form of a computer program product. The computer program product includes one or more computer instructions. When the computer instructions are loaded and executed on a computer, they fully or partially generate the processes or functions described in the embodiments of the present application. The computer can be a general-purpose computer, a dedicated computer, a computer network, or another programmable device. The computer instructions can be stored in a computer-readable storage medium or transmitted from one computer-readable storage medium to another. For example, the computer instructions can be transmitted from one website, computer, server, or data center to another through wired means (e.g., coaxial cable, optical fiber, digital subscriber line (DSL)) or wireless means (e.g., infrared, radio, microwave). The computer-readable storage medium can be any available medium readable by a computer or an integrated data storage device such as a server or data center containing one or more available media. The available media can be magnetic media (e.g., floppy disk, hard disk, magnetic tape), optical media (e.g., digital video disc (DVD)), or semiconductor media (e.g., solid-state disk (SSD)), etc.

The above description is merely specific embodiments of the present application, but the scope of protection of the present application is not limited to this. Any changes or substitutions that can be easily conceived by those skilled in the art within the technical scope disclosed by the present application should be covered within the scope of protection of the present application. Therefore, the scope of protection of the present application should be determined by the scope of the claims.

**Claims**

1. A method for sidelink transmission, comprising:

determining, by a first terminal device, first information, wherein the first information is used to indicate a time-domain resource belonging to a resource pool within a system frame number (SFN) duration;

wherein the resource pool is used for transmission of a physical sidelink control channel (PSCCH) and/or a physical sidelink shared channel (PSSCH) based on a first time unit, the first time unit comprising $M1$ consecutive slots, and $M1$ being a positive integer greater than 1.

2. The method according to claim 1, wherein the sidelink transmission comprises an sidelink synchronization signal block (S-SSB) transmission, and the S-SSB transmission comprises S-SSB transmission based on the first time unit or S-SSB transmission based on a second time unit, wherein the second time unit comprises $M2$ consecutive slots, and $M2$ is an integer greater than or equal to 1.

3. The method according to claim 2, wherein in response to the S-SSB transmission comprising the S-SSB transmission based on the first time unit, the time-domain resource belonging to the resource pool is determined from a first set, and the first set is determined based on one or more of the following:

a first time-domain resource, determined based on a time-domain resource for S-SSB transmission within the SFN duration;

a second time-domain resource, determined based on a time-domain resource unavailable for sidelink transmission within the SFN duration; or

a third time-domain resource, determined based on a reserved time-domain resource within the SFN duration; wherein the first set comprises a plurality of first time units.

4. The method according to claim 3, wherein the number of first time units comprised in the first set is determined based on a first quantity, wherein the first quantity is equal to $10240 \times 2^{\mu}/M1 - N_{S\text{-}SSB} - N_{nonSL} - N_{reserved}$, $N_{S\text{-}SSB}$ represents a parameter determined based on the number of first time units comprised in the first time-domain resource, $N_{nonSL}$ represents a parameter determined based on the number of first time units comprised in the second time-domain resource, $N_{reserved}$ represents a parameter determined based on the number of first time units comprised in the third time-domain resource, and $\mu$ represents a parameter determined based on a sidelink subcarrier spacing.

5. The method according to claim 3 or 4, wherein the number of first time units comprised in the third time-domain resource is determined based on one or more of the following:

the number of first time units comprised in the first time-domain resource;
the number of first time units comprised in the second time-domain resource; and
the number of bits corresponding to the first information.

6. The method according to claim 5, wherein the number of first time units comprised in the third time-domain resource satisfies:

$$N_{reserved} = (10240 \times 2^{\mu}/M1 - N_{S-SSB} - N_{nonSL}) \bmod L,$$

wherein $N_{S\text{-}SSB}$ represents a parameter determined based on the number of first time units comprised in the first time-domain resource, $N_{nonSL}$ represents a parameter determined based on the number of first time units comprised in the second time-domain resource, $N_{reserved}$ represents the number of first time units comprised in the third time-domain resource, $L$ represents the number of bits corresponding to the first information, and $\mu$ represents a parameter determined based on a sidelink subcarrier spacing.

7. The method according to any one of claims 3-6, wherein the third time-domain resource is determined from a second set based on one or more of the following:

the number of first time units comprised in the first time-domain resource;
the number of first time units comprised in the second time-domain resource;
the number of first time units comprised in the third time-domain resource;
wherein time units in the second set are time units corresponding to target time-domain resources among time-domain resources within the SFN duration, and the target time-domain resources are remaining time-domain resources within the SFN duration excluding the first time-domain resource and the second time-domain resource.

8. The method according to claim 7, wherein the third time-domain resource comprises the $r^{th}$ time unit in the second set, wherein r is an integer, $0 \leq r < 10240 \times 2^{\mu}/M1 - N_{S\text{-}SSB} - N_{nonSL}$, and $r = \left\lfloor \dfrac{m \cdot (10240 \times 2^{\mu}/M1 - N_{S-SSB} - N_{nonSL})}{N_{reserved}} \right\rfloor$, $\lfloor \ \rfloor$ represents a floor operation, $m = 0,1, \cdots, N_{reserved} - 1$, $N_{S\text{-}SSB}$ represents a parameter determined based on the number of first time units comprised in the first time-domain resource, $N_{nonSL}$ represents a parameter determined based on the number of first time units comprised in the second time-domain resource, $N_{reserved}$ represents a parameter determined based on the number of first time units comprised in the third time-domain resource, and $\mu$ represents a parameter determined based on a sidelink subcarrier spacing.

9. The method according to any one of claims 3-8, wherein the number of slots within the SFN duration is an integer multiple of the number of slots comprised in the first time unit.

10. The method according to claim 2, wherein in response to the S-SSB transmission comprising the S-SSB transmission based on the second time unit, the time-domain resource indicated by the first information is determined from a first set, and the first set is determined based on one or more of the following:

    a first time-domain resource determined based on a time-domain resource for S-SSB transmission within the SFN duration;
    a second time-domain resource determined based on a time-domain resource unavailable for sidelink transmission within the SFN duration; or
    a third time-domain resource determined based on a reserved time-domain resource within the SFN duration;
    wherein the first set comprises a plurality of first time units.

11. The method according to claim 10, wherein the number of first time units comprised in the first set is determined based on a second quantity, wherein the second quantity is equal to $(10240 \times 2^{\mu} - N_{S\text{-}SSB} - N_{nonSL})/M1 - N_{reserved}$, $N_{S\text{-}SSB}$ represents a parameter determined based on the number of second time units comprised in the first time-domain resource, $N_{nonSL}$ represents a parameter determined based on the number of time-domain resources comprised in the second time-domain resource, $N_{reserved}$ represents a parameter determined based on the number of time-domain resources included in the third time-domain resource, and $\mu$ represents a parameter determined based on a sidelink subcarrier spacing.

12. The method according to claim 10 or 11, wherein the number of time-domain resources comprised in the third time-domain resource is determined based on one or more of the following:

    the number of time-domain resources comprised in the first time-domain resource;
    the number of time-domain resources comprised in the second time-domain resource; and
    the number of bits corresponding to the first information.

13. The method according to claim 12, wherein the number of time-domain resources comprised in the third time-domain resource satisfies:

$$N_{reserved} = (10240 \times 2^{\mu} - N_{S-SSB} - N_{nonSL})/M1 \bmod L;$$

wherein $N_{S\text{-}SSB}$ represents a parameter determined based on the number of time-domain resources comprised in the first time-domain resource, $N_{nonSL}$ represents a parameter determined based on the number of time-domain resources comprised in the second time-domain resource, $N_{reserved}$ represents the number of time-domain resources comprised in the third time-domain resource, L represents the number of bits corresponding to the first information, and $\mu$ represents a parameter determined based on a sidelink subcarrier spacing.

14. The method according to any one of claims 10-13, wherein the third time-domain resource is determined from a second set based on one or more of the following:

    the number of time-domain resources comprised in the first time-domain resource;
    the number of time-domain resources comprised in the second time-domain resource; and
    the number of time-domain resources comprised in the third time-domain resource;
    wherein time units in the second set are time units corresponding target time-domain resources among time-domain resources within the SFN duration, and the target time-domain resources are time-domain resources within the SFN duration other than the first time-domain resource and the second time-domain resource.

15. The method according to claim 14, wherein the third time-domain resource is the $r^{th}$ time unit in the second set, wherein r is an integer, $0 \leq r < (10240 \times 2^{\mu} - N_{S\text{-}SSB} - N_{nonSL})/M1$, and $r = \left\lfloor \dfrac{m \cdot (10240 \times 2^{\mu} - N_{S\text{-}SSB} - N_{nonSL})/M1}{N_{reserved}} \right\rfloor$, $\lfloor$ $\rfloor$ represents a floor operation, $m = 0,1, \cdots, N_{reserved} - 1$, $N_{S\text{-}SSB}$ represents a parameter determined based on the number of time-domain resources comprised in the first time-domain resource, $N_{nonSL}$ represents a parameter determined based on the number of time-domain resources comprised in the second time-domain resource, $N_{reserved}$ represents a parameter determined based on the number of time-domain resources comprised in the third time-domain resource, and $\mu$ represents a parameter determined based on a sidelink subcarrier spacing.

16. The method according to any one of claims 10-15, wherein the number of slots between two adjacent second time units for S-SSB transmission within the SFN duration is an integer multiple of the number of slots comprised in the first time unit.

17. The method according to any one of claims 10-16, wherein the number of remaining slots after subtracting the number of slots in the first time-domain resource and the number of slots in the second time-domain resource from the total number of slots within the SFN duration is an integer multiple of the number of slots comprised in the first time unit.

18. The method according to any one of claims 3-16, wherein the number of remaining slots after subtracting the number of slots in the first time-domain resource, the number of slots in the second time-domain resource, and the number of slots included in the third time-domain resource from the total number of slots within the SFN duration is an integer multiple of the number of slots comprised in the first time unit.

19. The method according to any one of claims 3-18, wherein the number of remaining slots after subtracting the number of slots in the first time-domain resource, the number of slots in the second time-domain resource, and the number of slots included in the third time-domain resource from the total number of slots within the SFN duration is an integer multiple of the number of bits corresponding to the first information.

20. The method according to any one of claims 3-19, wherein the first information is a bitmap, and in response to the value of the $(k'+1)^{th}$ bit in the bitmap being 1, the $(k+1)^{th}$ time unit in the first set belongs to the resource pool, wherein $k'$ represents an index of a bit in the bitmap, $k$ represents an index of a time unit in the first set, $k$ and $k'$ are both integers greater than or equal to 0, and $k$ is determined based on $k'$ and $L$, wherein $L$ represents the length of the bitmap.

21. The method according to claim 20, wherein $k'=k \bmod L$, wherein $mod$ represents a modulo operation.

22. The method according to any one of claims 3-21, wherein in response to the 1st symbol available for sidelink transmission in a slot being the 1st symbol of the slot, the number of slots within the SFN duration that is unavailable for sidelink transmission is 0.

23. A terminal device, being a first terminal device and comprising:

   a processing unit, configured to determine first information, wherein the first information is used to indicate a time-domain resource belonging to a resource pool in a system frame number (SFN) duration;
   wherein the resource pool is used for transmission of a physical sidelink control channel (PSCCH) and/or a physical sidelink shared channel (PSSCH) based on a first time unit, the first time unit comprising $M1$ consecutive slots, and $M1$ being a positive integer greater than 1.

24. The terminal device according to claim 23, wherein the sidelink transmission comprises an sidelink synchronization signal block (S-SSB) transmission, and the S-SSB transmission comprises S-SSB transmission based on the first time unit or S-SSB transmission based on a second time unit, wherein the second time unit comprises $M2$ consecutive slots, and $M2$ is an integer greater than or equal to 1.

25. The terminal device according to claim 24, wherein in response to the S-SSB transmission comprising the S-SSB transmission based on the first time unit, the time-domain resource belonging to the resource pool is determined from a first set, and the first set is determined based on one or more of the following:

a first time-domain resource, determined based on a time-domain resource for S-SSB transmission within the SFN duration;

a second time-domain resource, determined based on a time-domain resource unavailable for sidelink transmission within the SFN duration; or

a third time-domain resource, determined based on a reserved time-domain resource within the SFN duration;

wherein the first set comprises a plurality of first time units.

26. The terminal device according to claim 25, wherein the number of first time units comprised in the first set is determined based on a first quantity, wherein the first quantity is equal to $10240 \times 2^{\mu}/M1 - N_{S\text{-}SSB} - N_{nonSL} - N_{reserved}$, $N_{S\text{-}SSB}$ represents a parameter determined based on the number of first time units comprised in the first time-domain resource, $N_{nonSL}$ represents a parameter determined based on the number of first time units comprised in the second time-domain resource, $N_{reserved}$ represents a parameter determined based on the number of first time units comprised in the third time-domain resource, and $\mu$ represents a parameter determined based on a sidelink subcarrier spacing.

27. The terminal device according to claim 25 or 26, wherein the number of first time units comprised in the third time-domain resource is determined based on one or more of the following:

the number of first time units comprised in the first time-domain resource;

the number of first time units comprised in the second time-domain resource; or

the number of bits corresponding to the first information.

28. The terminal device according to claim 27, wherein the number of first time units comprised in the third time-domain resource satisfies:

$$N_{reserved} = (10240 \times 2^{\mu}/M1 - N_{S-SSB} - N_{nonSL}) \bmod L$$

wherein $N_{S\text{-}SSB}$ represents a parameter determined based on the number of first time units comprised in the first time-domain resource, $N_{nonSL}$ represents a parameter determined based on the number of first time units comprised in the second time-domain resource, $N_{reserved}$ represents the number of first time units comprised in the third time-domain resource, L represents the number of bits corresponding to the first information, and $\mu$ represents a parameter determined based on a sidelink subcarrier spacing.

29. The terminal device according to any one of claims 25-28, wherein the third time-domain resource is determined from a second set based on one or more of the following:

the number of first time units comprised in the first time-domain resource;

the number of first time units comprised in the second time-domain resource; or

the number of first time units comprised in the third time-domain resource;

wherein time units in the second set are time units corresponding to target time-domain resources among time-domain resources within the SFN duration, and the target time-domain resources are remaining time-domain resources within the SFN duration excluding the first time-domain resource and the second time-domain resource.

30. The terminal device according to claim 29, wherein the third time-domain resource comprises the $r^{th}$ time unit in the second set,

wherein r is an integer, $0 \leq r < 10240 \times 2^{\mu}/M1 - N_{S\text{-}SSB} - N_{nonSL}$, and $r = \left\lfloor \dfrac{m \cdot (10240 \times 2^{\mu}/M1 - N_{S-SSB} - N_{nonSL})}{N_{reserved}} \right\rfloor$,

$N_{S\text{-}SSB}$ represents a parameter determined based on the number of first time units comprised in the first time-domain resource, $N_{nonSL}$ represents a parameter determined based on the number of first time units comprised in the second time-domain resource, $N_{reserved}$ represents a parameter determined based on the number of first time units comprised in the third time-domain resource, and $\mu$ represents a parameter determined based on a sidelink subcarrier spacing.

31. The terminal device according to any one of claims 25-30, wherein the number of slots within the SFN duration is an integer multiple of the number of slots comprised in the first time unit.

32. The terminal device according to claim 24, wherein in response to the S-SSB transmission comprising the S-SSB transmission based on the second time unit, the time-domain resource indicated by the first information is determined from a first set, and the first set is determined based on one or more of the following:

> a first time-domain resource determined based on a time-domain resource for S-SSB transmission within the SFN duration;
> a second time-domain resource determined based on a time-domain resource unavailable for sidelink transmission within the SFN duration; or
> a third time-domain resource determined based on a reserved time-domain resource within the SFN duration;
> wherein the first set comprises a plurality of first time units.

33. The terminal device according to claim 32, wherein the number of first time units comprised in the first set is determined based on a second quantity, wherein the second quantity is equal to $(10240 \times 2^{\mu} - N_{S\text{-}SSB} - N_{nonSL})/M1 - N_{reserved}$, $N_{S\text{-}SSB}$ represents a parameter determined based on the number of second time units comprised in the first time-domain resource, $N_{nonSL}$ represents a parameter determined based on the number of time-domain resources comprised in the second time-domain resource, $N_{reserved}$ represents a parameter determined based on the number of time-domain resources included in the third time-domain resource, and $\mu$ represents a parameter determined based on a sidelink subcarrier spacing.

34. The terminal device according to claim 32 or 33, wherein the number of time-domain resources comprised in the third time-domain resource is determined based on one or more of the following:

> the number of time-domain resources comprised in the first time-domain resource;
> the number of time-domain resources comprised in the second time-domain resource; or
> the number of bits corresponding to the first information.

35. The terminal device according to claim 34, wherein the number of time-domain resources comprised in the third time-domain resource satisfies:

$$N_{reserved} = (10240 \times 2^{\mu} - N_{S-SSB} - N_{nonSL})/M1 \ mod \ L;$$

wherein $N_{S\text{-}SSB}$ represents a parameter determined based on the number of time-domain resources comprised in the first time-domain resource, $N_{nonSL}$ represents a parameter determined based on the number of time-domain resources comprised in the second time-domain resource, $N_{reserved}$ represents the number of time-domain resources comprised in the third time-domain resource, $L$ represents the number of bits corresponding to the first information, and $\mu$ represents a parameter determined based on a sidelink subcarrier spacing.

36. The terminal device according to any one of claims 32-35, wherein the third time-domain resource is determined from a second set based on one or more of the following:

> the number of time-domain resources comprised in the first time-domain resource;
> the number of time-domain resources comprised in the second time-domain resource; or
> the number of time-domain resources comprised in the third time-domain resource;
> wherein time units in the second set are time units corresponding target time-domain resources among time-domain resources within the SFN duration, and the target time-domain resources are time-domain resources within the SFN duration other than the first time-domain resource and the second time-domain resource.

37. The terminal device according to claim 36, wherein the third time-domain resource is the $r^{th}$ time unit in the second set, wherein r is an integer, $0 \leq r < (10240 \times 2^{\mu} - N_{S\text{-}SSB} - N_{nonSL})/M1$, and $r = \left\lfloor \dfrac{m \cdot (10240 \times 2^{\mu} - N_{S-SSB} - N_{nonSL})/M1}{N_{reserved}} \right\rfloor$,

$N_{S\text{-}SSB}$ represents a parameter determined based on the number of time-domain resources comprised in the first time-domain resource, $N_{nonSL}$ represents a parameter determined based on the number of time-domain resources comprised in the second time-domain resource, $N_{reserved}$ represents a parameter determined based on the number of time-domain resources comprised in the third time-domain resource, and $\mu$ represents a parameter determined based on a sidelink subcarrier spacing.

38. The terminal device according to any one of claims 32-37, wherein the number of slots between two adjacent second time units for S-SSB transmission within the SFN duration is an integer multiple of the number of slots comprised in the first time unit.

39. The terminal device according to any one of claims 32-38, wherein the number of remaining slots after subtracting the number of slots in the first time-domain resource and the number of slots in the second time-domain resource from the total number of slots within the SFN duration is an integer multiple of the number of slots comprised in the first time unit.

40. The terminal device according to any one of claims 25-38, wherein the number of remaining slots after subtracting the number of slots in the first time-domain resource, the number of slots in the second time-domain resource, and the number of slots included in the third time-domain resource from the total number of slots within the SFN duration is an integer multiple of the number of slots comprised in the first time unit.

41. The terminal device according to any one of claims 25-40, wherein the number of remaining slots after subtracting the number of slots in the first time-domain resource, the number of slots in the second time-domain resource, and the number of slots included in the third time-domain resource from the total number of slots within the SFN duration is an integer multiple of the number of bits corresponding to the first information.

42. The terminal device according to any one of claims 25-41, wherein the first information is a bitmap, and in response to the value of the $(k'+1)^{th}$ bit in the bitmap being 1, the $(k+1)^{th}$ time unit in the first set belongs to the resource pool, wherein $k'$ represents an index of a bit in the bitmap, $k$ represents an index of a time unit in the first set, $k$ and $k'$ are both integers greater than or equal to 0, and $k$ is determined based on $k'$ and $L$, wherein $L$ represents the length of the bitmap.

43. The terminal device according to claim 42, wherein $k'=k \bmod L$, wherein $mod$ represents a modulo operation.

44. The terminal device according to any one of claims 25-43, wherein in response to the 1st symbol available for sidelink transmission in a slot being the 1st symbol of the slot, the number of slots within the SFN duration that is unavailable for sidelink transmission is 0.

45. A terminal device, comprising a memory and a processor, wherein the memory is configured to store a program, and the processor is configured to invoke the program from the memory to cause the terminal device to perform the method according to any one of claims 1-22.

46. An apparatus, comprising a processor, configured to invoke a program from a memory to cause the apparatus to perform the method according to any one of claims 1-22.

47. A chip, comprising a processor, configured to invoke a program from a memory to cause a device equipped with the chip to perform the method according to any one of claims 1-22.

48. A computer-readable storage medium, having a program stored thereon, wherein the program causes a computer to perform the method according to any one of claims 1-22.

49. A computer program product, comprising a program, wherein the program causes a computer to perform the method according to any one of claims 1-22.

50. A computer program, wherein the computer program causes a computer to perform the method according to any one of claims 1-22.

FIG. 1

FIG. 2

FIG. 3

120b

120b

SL
Communication

FIG. 4

Communication
Group

Terminal Device 1

Resource
Allocation

Resource
Allocation

Terminal
Device 2

Terminal
Device 3

◄—SL Communication—►

FIG. 5

Terminal Device 2

Terminal Device 6

Terminal Device 3

Terminal Device **1**

Terminal Device 5

Terminal Device 4

FIG. 6

Terminal Device 1                    Terminal Device 2

SL Data

FIG. 7

Communication Group

Terminal Device 2

Terminal Device 1

Terminal Device 3

Terminal Device 4

FIG. 8

| A G C | | | | PSSCH | | | | | | | | GP |
|---|---|---|---|---|---|---|---|---|---|---|---|---|
| | PSCCH | | | | | | | | | | | |

FIG. 9A

FIG. 9B

FIG. 10

GP ▨ AGC ▤ PSCCH/PSSCH

Slot n — Slot n+1

Time Unit

FIG. 11A

GP ▨ AGC ▤ PSCCH/PSSCH

Slot n — Slot n+1

Time Unit

FIG. 11B

☐ GP ▨ AGC ⊟ PSCCH/PSSCH ▦ PSFCH

Slot n — Slot n+1

Time Unit

FIG. 11C

☐ GP ▨ AGC ⊟ PSCCH/PSSCH ▦ PSFCH

Slot n — Slot n+1

Time Unit

FIG. 11D

☐ GP ▨ AGC ⊟ PSCCH/PSSCH

Slot n — Slot n+1 — Slot n+2 — Slot n+3

Time Unit

FIG. 12A

☐ GP ▨ AGC ⊟ PSCCH/PSSCH

Slot n — Slot n+1 — Slot n+2 — Slot n+3

Time Unit

FIG. 12B

☐ GP ▨ AGC ⊟ PSCCH/PSSCH ▦ PSFCH

Slot n — Slot n+1 — Slot n+2 — Slot n+3

Time Unit

FIG. 12C

☐ GP ▨ AGC ⊟ PSCCH/PSSCH ▦ PSFCH

Slot n — Slot n+1 — Slot n+2 — Slot n+3

Time Unit

FIG. 12D

▢ GP ▨ AGC ▢ PSCCH/PSSCH ▣ PSFCH

Slot n | Slot n+1 | Slot n+2 | Slot n+3

Time Unit

FIG. 12E

▢ GP ▨ AGC ▢ PSCCH/PSSCH ▣ PSFCH

Slot n | Slot n+1 | Slot n+2 | Slot n+3 | Slot n+4 | Slot n+5 | Slot n+6 | Slot n+7

Time Unit

FIG. 12F

▢ GP ▨ AGC ▨ S-SSB

Slot n

First Time Unit

FIG. 13A

▢ GP ▨ AGC ▨ S-SSB

Slot n | Slot n+1

First Time Unit

FIG. 13B

▢ GP ▨ AGC ▨ S-SSB

Slot n | Slot n+1

First Time Unit

FIG. 13C

□ GP ▨ AGC ▧ S-SSB

|←——————Slot n——————→|←——————Slot n+1——————→|
|←————————————————First Time Unit————————————————→|

FIG. 13D

□ GP ▨ AGC ▧ S-SSB

|←—Slot n—→|←—Slot n+1—→|←—Slot n+2—→|←—Slot n+3—→|
|←————————————————First Time Unit————————————————→|

FIG. 13E

□ GP ▨ AGC ▧ S-SSB

|←—Slot n—→|←—Slot n+1—→|←—Slot n+2—→|←—Slot n+3—→|
|←————————————————First Time Unit————————————————→|

FIG. 13F

First terminal device determines first information — S1410

FIG. 14

Terminal Device 1500

Processing Unit 1510

FIG. 15

Device 1600

Processor 1610

Memory 1620

Transceiver 1630

FIG. 16

## INTERNATIONAL SEARCH REPORT

| International application No. |
|---|
| **PCT/CN2023/081981** |

| A. | CLASSIFICATION OF SUBJECT MATTER |
|---|---|
| | H04W72/0446(2023.01)i |

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 侧链路, 旁路, 副链路, 次链路, 侧行, 资源池, 系统帧, 连续, 相邻, 时隙, sidelink, SL, resource, set, SFN, system frame number, slot

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021226858 A1 (GUANGDONG OPPO MOBILE COMMUNICATIONS CO., LTD.) 18 November 2021 (2021-11-18)<br>description, page 1, line 15 to page 16, line 23, and figures 6-8 | 1-50 |
| X | WO 2023279390 A1 (GUANGDONG OPPO MOBILE COMMUNICATIONS CO., LTD.) 12 January 2023 (2023-01-12)<br>description, page 1, line 15 to page 17, line 40 | 1-50 |
| A | CN 113473613 A (SHARP CORP.) 01 October 2021 (2021-10-01)<br>entire document | 1-50 |
| A | KR 20220122494 A (ELECTRONICS & TELECOMMUNICATIONS RESEARCH INSTITUTE) 02 September 2022 (2022-09-02)<br>entire document | 1-50 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 November 2023** | **22 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/081981** |

| Patent document cited in search report | | | Publication date (day/month/year) | Patent family member(s) | | | Publication date (day/month/year) |
| --- | --- | --- | --- | --- | --- | --- | --- |
| WO | 2021226858 | A1 | 18 November 2021 | EP | 4149186 | A1 | 15 March 2023 |
| | | | | EP | 4149186 | A4 | 24 May 2023 |
| | | | | JP | 2023530583 | A | 19 July 2023 |
| | | | | US | 2023069646 | A1 | 02 March 2023 |
| | | | | KR | 20230009503 | A | 17 January 2023 |
| WO | 2023279390 | A1 | 12 January 2023 | None | | | |
| CN | 113473613 | A | 01 October 2021 | WO | 2021197204 | A1 | 07 October 2021 |
| KR | 20220122494 | A | 02 September 2022 | US | 2022279590 | A1 | 01 September 2022 |

Form PCT/ISA/210 (patent family annex) (July 2022)